(19) Europäisches Patentamt
European Patent Office
Office européen des brevets

(11) **EP 3 670 127 A1**

(12) **DEMANDE DE BREVET EUROPEEN**

(43) Date de publication:
**24.06.2020 Bulletin 2020/26**

(51) Int Cl.:
***B29B 15/12*** *(2006.01)*

(21) Numéro de dépôt: **18306719.8**

(22) Date de dépôt: **18.12.2018**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(71) Demandeur: **Arkema France
92700 Colombes (FR)**

(72) Inventeurs:
• HOCHSTETTER, Gilles
  **92705 COLOMBES CEDEX (FR)**
• SAVART, Thibault
  **64170 LACQ (FR)**
• BABEAU, Arthur
  **64170 LACQ (FR)**
• SALINIER, Axel
  **64170 LACQ (FR)**

(54) **PROCEDE DE FABRICATION D'UN MATERIAU FIBREUX IMPREGNE DE POLYMERE THERMOPLASTIQUE**

(57) L'invention concerne un procédé de fabrication d'un matériau fibreux imprégné comprenant un matériau en fibres continues et une matrice thermoplastique, où ledit matériau fibreux imprégné est réalisé en au moins un ruban unique unidirectionnel, ledit procédé comprend une étape de pré-imprégnation dudit matériau fibreux sous forme d'au moind une mèche par ledit polymère thermoplastique et une étape de chauffage de la matrice thermoplastique permettant sa fusion après pré-imprégnation,
ladite étape de chauffage étant effectuée par une pièce d'embarrage (E) conductrice de la chaleur et d'un système de chauffage,
ladite pièce d'embarrage (E) étant thermostatée à une température comprise, pour un polymère thermoplastique semi-cristallin, de Tc-30°C à Tf+50°C et pour un polymère amorphe, de Tg+50°C à Tg+250°C,
ladite mèche ou lesdites mèches étant en contact avec la surface de ladite pièce d'embarrage (E) et défilant à la surface de ladite pièce d'embarrage (E) présente au niveau du système de chauffage,
et le taux de porosité dans ledit matériau fibreux imprégné étant inférieur à 10%.

## Description

Domaine technique

La présente invention concerne un procédé de fabrication d'un matériau fibreux imprégné de polymère thermoplastique.

Plus particulièrement, l'invention se rapporte à un procédé de fabrication d'un matériau fibreux imprégné comprenant une étape de pré-imprégnation d'un matériau fibreux par un polymère thermoplastique pour la préparation d'un matériau fibreux imprégné, et une étape de chauffage de la matrice thermoplastique en vue de l'obtention de rubans de matériau fibreux imprégné de manière homogène, notamment à coeur, de porosité réduite et contrôlée, de dimensions calibrées, directement utilisables pour la fabrication de pièces composites tridimensionnelles.

Dans la présente description, on entend par « matériau fibreux » un assemblage de fibres de renfort. Avant sa mise en forme, il se présente sous forme de mèches. Après sa mise en forme, il se présente sous forme de rubans (ou tapes), de bandes, ou de nappes. Lorsque les fibres de renfort sont continues, leur assemblage constitue un renfort unidirectionnel ou un tissu ou un non tissé (NCF). Lorsque les fibres sont courtes, leur assemblage constitue un feutre ou un mat de fibres.

Dans la présente description, on utilise le terme « bande » pour désigner des bandes de matériau fibreux dont la largeur est supérieure ou égale à 400mm. On utilise le terme « ruban » pour désigner des rubans de largeur calibrée et inférieure ou égale à 400mm.

De tels matériaux fibreux imprégnés sont notamment destinés à la réalisation de matériaux composites légers pour la fabrication de pièces mécaniques ayant une structure à trois dimensions et possédant de bonnes propriétés mécaniques et thermiques. Lorsque les fibres sont en carbone ou que la résine est chargée d'additifs adaptés, ces matériaux fibreux sont capables d'évacuer des charges électrostatiques. L'utilisation de résines ignifuges ou d'additifs ignifuges dans des résines qui ne le sont pas, permettent aux matériaux fibreux imprégnés d'être résistants au feu. Ils possèdent donc des propriétés compatibles avec la fabrication de pièces notamment dans les domaines de la mécanique, de l'aéronautique, du nautique, de l'automobile, du pétrole et du gaz, en particulier l'offshore, du stockage de gaz, de l'énergie, de la santé et du médical, des sports et loisirs, et de l'électronique.

De tels matériaux fibreux imprégnés sont également appelés matériaux composites. Ils comprennent le matériau fibreux, constitué des fibres de renfort, et d'une matrice constituée par le polymère imprégnant les fibres. Le premier rôle de cette matrice est de maintenir les fibres de renfort dans une forme compacte et de donner la forme voulue au produit final. Cette matrice assure également le transfert de charge entre les fibres et donc, conditionne la résistance mécanique du composite. Une telle matrice sert également à protéger les fibres de renfort contre l'abrasion et un environnement agressif, à contrôler l'aspect de surface et à disperser d'éventuelles charges entre les fibres. Le rôle de cette matrice est important pour la tenue à long terme du matériau composite, notamment en ce qui concerne la fatigue et le fluage.

Etat de la technique

Une bonne qualité des pièces composites tridimensionnelles fabriquées à partir de matériaux fibreux imprégnés passe notamment par une maîtrise du procédé d'imprégnation des fibres de renfort par le polymère thermoplastique.

Dans la présente description, on utilise le terme « bande » pour désigner des bandes de matériau fibreux dont la largeur est supérieure ou égale à 400mm. On utilise le terme « ruban » pour désigner des rubans de largeur calibrée et inférieure ou égale à 400mm.

Le terme « mèche » est également employé pour désigner le matériau fibreux.

Jusqu'à présent, la fabrication de bandes de matériaux fibreux renforcées par imprégnation de polymère thermoplastique ou de polymère thermodurcissable s'effectuait suivant plusieurs procédés qui dépendent notamment de la nature du polymère, du type de matériau composite final souhaité et de son domaine d'applications, certains de ces procédés étant constitués d'une étape d'imprégnation suivie d'une étape de calandrage à chaud du matériau fibreux imprégné ou d'une étape de séchage éventuellement suivie d'une étape de fusion du polymère thermoplastique.

Ainsi les technologies d'imprégnation en voie humide ou au moyen d'un précurseur liquide ou de très faible viscosité, polymérisant in situ, sont souvent utilisées pour imprégner les fibres de renfort par des polymères thermodurcissables, comme les résines époxy par exemple, tel que décrit dans le brevet WO2012/066241A2. Ces technologies ne sont généralement pas applicables directement à l'imprégnation par des polymères thermoplastiques, car ceux-ci disposent rarement de précurseurs liquides.

Les procédés d'imprégnation par extrusion en tête d'équerre d'un polymère fondu sont adaptés à l'utilisation des polymères thermoplastiques de faible viscosité uniquement. Les polymères thermoplastiques, en particulier ceux à haute température de transition vitreuse ont une viscosité à l'état fondu trop importante pour permettre une imprégnation satisfaisante des fibres et des produits semi-finis ou finis de bonne qualité.

La demande US 2014/0005331A1 décrit un procédé de préparation de fibres imprégnées avec une résine polymère, la bande obtenue étant asymétrique, c'est-à-dire qu'elle possède une face riche en polymère et une face opposée riche en fibres.

Le procédé s'effectue par voie fondue avec un dispositif ne permettant l'imprégnation majoritaire que sur l'une des faces.

Un autre procédé connu de pré-imprégnation est le passage en continu des fibres dans une dispersion aqueuse de poudre polymère ou dispersion aqueuse de particules de polymère ou émulsion ou suspension aqueuse de polymère. On peut par exemple se référer au document EP0324680. On utilise dans ce procédé une dispersion de poudres de taille micrométrique (environ 20 μm). Après trempage dans la solution aqueuse, les fibres sont imprégnées par la poudre polymère. Le procédé implique alors une étape de séchage consistant à faire passer les fibres imprégnées dans un premier four afin d'évaporer l'eau absorbée pendant le trempage. Une étape de traitement thermique, consistant à faire passer les fibres imprégnées et séchées dans une seconde zone de chauffage, à haute température, est ensuite nécessaire pour fondre le polymère afin qu'il adhère, se répartisse et recouvre les fibres.

Le principal inconvénient de cette méthode est l'homogénéité du dépôt qui est parfois imparfaite, une enduction effectuée uniquement en surface. En outre la granulométrie des poudres utilisées usuellement est fine (typiquement 20μm de D50 en volume) et cela augmente également le coût final du ruban ou de la nappe imprégnées.

Par ailleurs, l'étape de séchage de cette méthode induit une porosité dans les fibres imprégnées par évaporation de l'eau.

Le matériau fibreux imprégné nécessite ensuite d'être mis en forme sous forme de rubans par exemple.

Des sociétés commercialisent des bandes de matériaux fibreux obtenues par une méthode d'imprégnation de fibres unidirectionnelles par passage des fibres, en continu, dans un bain contenant un solvant organique tel que la benzophénone, dans lequel le polymère thermoplastique est dissous. On peut par exemple se référer au document US 4 541 884 de l'Imperial Chemical Industries. La présence du solvant organique permet notamment d'adapter la viscosité du polymère et d'assurer une bonne enduction des fibres. Les fibres ainsi imprégnées sont ensuite mises en forme. Elles peuvent par exemple être découpées en bandes de différentes largeurs puis disposées sous une presse, puis chauffées à une température supérieure à la température de fusion du polymère pour assurer la cohésion du matériau et notamment l'adhérence du polymère sur les fibres. Cette méthode d'imprégnation et de mise en forme permet de réaliser des pièces de structure à haute tenue mécanique.

Un des inconvénients de cette technique réside dans la température de chauffe nécessaire à l'obtention de ces matériaux. La température de fusion des polymères dépend notamment de leur nature chimique. Elle peut être relativement élevée pour des polymères de type polyamide 6, voire très élevée pour des polymères de type poly(sulfure de phénylène) (PPS), polyamide HT, poly(éther éther cétone) (PEEK) ou poly(éther cétone cétone) (PEKK) par exemple. La température de chauffe peut donc monter à des températures supérieures à 250°C, et même supérieures à 350°C, températures qui sont très supérieures à la température d'ébullition et au point éclair du solvant, qui sont respectivement de 305°C et 150°C pour la benzophénone. Dans ce cas, on assiste à un départ brusque du solvant induisant une forte porosité au sein des fibres et provoquant par conséquent l'apparition de défauts dans le matériau composite. Le procédé est donc difficilement reproductible et implique des risques d'incendie mettant en danger les opérateurs. Enfin, l'utilisation de solvants organiques est à éviter pour des raisons environnementales et d'hygiène et sécurité des opérateurs.

Le document EP 0 406 067, déposé aux noms conjoints d'Atochem et de l'Etat Français, ainsi que le document EP0 201 367 décrivent quant à eux une technique d'imprégnation sur lit fluidisé de poudre de polymère. Les fibres pénètrent dans une cuve de fluidisation fermée où, en ce qui concerne EP 0 406 067, elles sont éventuellement séparées les unes des autres au moyen de galets ou de cylindres cannelés, les fibres se chargeant électrostatiquement, par frottement au contact de ces galets ou cylindres. Cette charge électrostatique permet à la poudre de polymère de se coller en surface des fibres et ainsi de les imprégner.

La demande internationale WO 2016/062896 décrit un poudrage de mèche par un procédé électrostatique en charge volontaire, par mise à la masse de la mèche et application d'une différence de potentiel entre la pointe d'un pistolet ou buses de poudrage et la mèche.

Le document WO2008/135663 décrit, dans une troisième variante, la réalisation d'un ruban de fibres imprégné. Dans ce document, le ruban de fibres est déjà préformé préalablement à l'étape d'imprégnation, sous forme d'un ruban formé de fibres maintenues ensemble par des moyens de contention. Le ruban ainsi préformé est préalablement chargé en électricité statique et plongé dans une enceinte contenant un lit fluidisé de fines particules de polymère en suspension dans l'air comprimé, de manière à revêtir le ruban d'une couche de revêtement polymère. Un tel document ne permet pas de réaliser une imprégnation d'une ou plusieurs mèches de fibres en simultané ni une mise en forme, en continu, des mèches imprégnées sous forme de rubans.

Le document EP2586585 décrit lui aussi le principe d'imprégner des fibres en les passant dans un lit fluidisé de particules de polymère. En revanche, il ne décrit pas une mise en forme en continu d'une ou plusieurs mèches ainsi imprégnées, sous forme d'un ou plusieurs rubans parallèles unidirectionnels.

La demande US 2002/0197397 décrit un procédé d'imprégnation de fibres par un mélange de poudres de polymères, ledit mélange étant effectué directement dans un lit fluidisé, sans compoundage.

La demande internationale WO 2015/121583 décrit un procédé de fabrication d'un matériau fibreux imprégné par imprégnation dudit matériau en lit fluidisé puis calandrage à chaud de ladite mèche permettant la mise en forme de ladite mèche ou desdites mèches parallèles dudit matériau.

Le calandrage à chaud est effectué en aval du dispositif d'imprégnation et permet d'homogénéiser la répartition du polymère et l'imprégnation des fibres mais ne permet pas d'obtenir un ruban imprégné de manière homogène. La porosité obtenue est non quantifiée. Le document EP0335186 décrit la possibilité d'utiliser une calandre ou une presse pour compacter un composite comprenant des fibres métalliques imprégnées, utilisé pour la fabrication de corps moulé pour le blindage contre le rayonnement électromagnétique. Il ne décrit pas le fait d'imprégner une ou plusieurs mèches de fibres et de les mettre en forme, en continu, sous forme d'un ou plusieurs rubans parallèles unidirectionnels par chauffage après imprégnation au moyen d'une pièce d'embarrage conductrice de la chaleur et d'au moins un système de chauffage.

Le document DE1629830 décrit un procédé d'imprégnation de fils constitués par une multitude de brins renforcés par un tissu en matière synthétique thermoplastique comprenant les étapes suivantes :

passage des fils à travers une phase liquide de matière synthétique thermoplastique,
Passage à travers une buse de raclage,
Passage à travers un canal chauffé à la température nécessaire à la gélification ou le séchage et la plastification de la matière synthétique entrainée par les fils,
Guidage à travers des cylindres chauffés après sortie du canal chauffant et laminage des mèches.

Le document EP 2 725 055 décrit un procédé d'imprégnation d'un renfort fibreux par du PEEK comprenant les étapes suivantes :

Alimentation continue d'un renfort fibreux,
Combinaison du renfort fibreux et d'un oligomère de PEEK pour former un composite,
Polymérisation de l'oligomère en poly PEEK,
Refroidissement et récupération du composite comprenant le renfort fibreux et le poly PEEK.

Le document EP 0 287 427 décrit un procédé d'imprégnation par voie fondue avec un épanouissement des mèches avec des embarrages.

Une première zone d'épanouissement avec des embarrages permet d'épanouir les fibres avant d'imprégner celles-ci par voie fondue puis une deuxième zone d'embarrages chauffée est présente.

Le document JP 2013 132890 décrit un procédé de production de tapes plastique renforcées par des fibres caractérisé en ce que les fibres passent à travers une machine de recouvrement de résine thermoplastique, en particulier une extrudeuse à tête d'équerre puis passage des fibres imprégnées dans un guide comprenant une partie supérieure et une partie inférieure, la partie inférieure pouvant comprendre des rouleaux et le guide pouvant être chauffé.

WO 96/28258) décrit un procédé ne comprenant pas d'épanouissement de la mèche.

Les fibres sont introduites dans une chambre de recouvrement par poudre dans laquelle les particules de poudre chargées électrostatiquement sont déposées sur les fibres puis les mèches sont introduites dans un four dans lequel les particules sont partiellement fondues sur les fibres et les fibres imprégnées sont ensuite passées autour d'un rouleau de refroidissement.

Concernant la mise en forme des matériaux fibreux imprégnés sous forme de rubans calibrés, adaptés à la fabrication de pièces composites tridimensionnelles par dépose automatique au moyen d'un robot, celle-ci est en général réalisée en post-traitement.

Ainsi, le document WO92/20521 décrit la possibilité d'imprégner une mèche de fibres en la passant dans un lit fluidisé de particules de poudre thermoplastique. Les fibres ainsi recouvertes de particules de polymère sont chauffées dans un four, ou un dispositif de chauffage, pour que le polymère pénètre bien et recouvre les fibres. Un post-traitement du renfort fibreux imprégné obtenu, peut consister à le faire passer dans un ensemble de rouleau de calandrage permettant d'améliorer l'imprégnation par la matrice encore liquide. Un tel document ne permet pas de réaliser une imprégnation d'une ou plusieurs mèches de fibres et une mise en forme, en continu, des mèches imprégnées sous forme d'un ou plusieurs rubans parallèles unidirectionnels.

La qualité des rubans de matériau fibreux imprégné, et donc la qualité du matériau composite final, dépend non seulement de l'homogénéité de l'imprégnation des fibres et donc du contrôle et de la reproductibilité de la porosité du matériau fibreux imprégné, mais également de la dimension et plus particulièrement de la largeur et de l'épaisseur des rubans finaux. Une régularité et un contrôle de ces deux paramètres dimensionnels permettent en effet d'améliorer la tenue mécanique des matériaux composites obtenus (à partir des rubans).

Actuellement, quel que soit le procédé utilisé pour l'imprégnation des matériaux fibreux, la fabrication de rubans de faible largeur, c'est-à-dire de largeur inférieure à 400mm, nécessite généralement une refente (c'est-à-dire une découpe) de bandes de largeur supérieure à 400 mm, encore dénommées nappes. Les rubans ainsi dimensionnés sont ensuite repris pour être déposés par un robot à l'aide d'une tête.

En outre, les rouleaux de nappes ne dépassant pas une longueur de l'ordre de 1 km, les rubans obtenus après découpe ne sont en général pas suffisamment longs pour fabriquer certaines pièces composites de taille importante lors de la dépose par robot. Les rubans doivent donc être raboutés pour obtenir une longueur plus importante, créant alors des surépaisseurs. Ces surépaisseurs entrainent l'apparition d'hétérogénéités qui sont préjudiciables à l'obtention de matériaux composites de bonne qualité constituant les dites pièces composites. De plus, ces surépaisseurs nécessitent un arrêt machine et la relance du robot et donc perte de temps et de productivité.

Les techniques actuelles d'imprégnation de matériaux fibreux et de mise en forme de tels matériaux fibreux imprégnés sous forme de rubans calibrés présentent donc plusieurs inconvénients. Il est par exemple difficile de chauffer de manière homogène un mélange fondu de polymères thermoplastiques dans une filière et en sortie de filière, jusqu'au coeur du matériau, ce qui altère la qualité de l'imprégnation. De plus, la différence de température existante entre les fibres et un mélange fondu de polymères au niveau de la filière d'imprégnation altère également la qualité et l'homogénéité de l'imprégnation. En outre, ce mode d'imprégnation par voie fondue ne permet pas l'obtention de fort taux de fibres ou de grandes vitesses de production à cause de la grande viscosité des résines thermoplastiques, notamment lorsqu'elles présentent des températures de transition vitreuse élevées, ce qui est nécessaire à l'obtention de matériaux composites de haute performance.

L'utilisation de solvants organiques implique généralement l'apparition de défauts dans le matériau ainsi que des risques environnementaux, de santé et de sécurité en général.

La mise en forme, par post-traitement à haute température du matériau fibreux imprégné sous forme de bandes, reste difficile car elle ne permet pas toujours une répartition homogène du polymère au sein des fibres ce qui entraine l'obtention d'un matériau de moindre qualité, avec une porosité mal contrôlée.

La refente de nappes pour l'obtention de rubans calibrés et le raboutage de ces rubans induit un coût supplémentaire de fabrication. La refente génère en outre des problèmes importants de poussières qui polluent les rubans de matériaux fibreux imprégnés utilisés pour la dépose robot et peuvent entrainer des dysfonctionnements des robots et/ou des imperfections sur les composites. Ceci entraine potentiellement des coûts de réparation des robots, un arrêt de la production et la mise au rebut des produits non conformes. Enfin, lors de l'étape de refente, une quantité non négligeable de fibres est détériorée, induisant une perte de propriétés, et notamment une réduction de la résistance mécanique et de la conductivité, des rubans de matériau fibreux imprégné.

Outre le surcout et la détérioration des rubans induits par le refendage, un autre inconvénient de la refente de nappes de largeur supérieure à 400mm notamment est la longueur maximale des rubans obtenus. En effet, la longueur de ces nappes larges ne dépasse que rarement les 1000-1200m linéaires, notamment à cause du poids final des nappes obtenues qui doit être compatible avec le procédé de refendage. Or, pour la réalisation de nombreuses pièces composites par dépose de rubans calibrés, notamment pour les pièces de grande dimension, une bobine de 1000m est trop courte pour ne pas avoir à réalimenter le robot en cours de fabrication de la pièce, induisant là encore un surcout. Pour augmenter la dimension des rubans refendus, il est possible de rabouter plusieurs bobines ; ce procédé consiste en la superposition et la soudure à chaud de deux rubans, induisant une surépaisseur dans le ruban final, et donc des défauts à venir lors de la dépose avec une surépaisseur placée de manière aléatoire dans la pièce finale.

Par ailleurs, les différents procédés décrits ci-dessus ne permettent pas une imprégnation homogène de la mèche ce qui est défavorable pour les applications énumérées ci-dessus. L'imprégnation ne s'effectue pas toujours à coeur et si lesdits documents cités ci-dessus indiquent une imprégnation à coeur, il s'avère que la porosité obtenue est trop importante, notamment pour les applications énumérées ci-dessus.

L'invention a donc pour but de remédier à au moins un des inconvénients de l'art antérieur. L'invention vise notamment à proposer un procédé de fabrication d'un matériau fibreux imprégné, par une technique de pré-imprégnation à grande vitesse suivie d'au moins une étape de chauffage de la matrice thermoplastique, permettant la fusion ou le maintien en fusion dudit polymère thermoplastique après pré-imprégnation, au moyen d'au moins une pièce d'embarrage (E) conductrice de la chaleur et d'au moins un système de chauffage, et dans le cas où ladite matrice polymère thermoplastique est semi-cristalline ladite au moins une pièce d'embarrage (E) étant thermostatée à une température comprise de la température de cristallisation (Tc) dudit polymère - 30°C à la température de fusion (Tf) dudit polymère +50°C, de préférence comprise de la température de cristallisation dudit polymère à la température de fusion dudit polymère et dans le cas où ladite matrice thermoplastique est amorphe, ladite au moins une pièce d'embarrage (E) étant thermostatée à une température comprise de la Tg + 50°C dudit polymère à Tg +250°C, de préférence de Tg + 100°C à Tg +200°C, à l'exclusion d'une calandre chauffante, et d'obtenir un matériau fibreux imprégné présentant une imprégnation homogène des fibres, notamment à coeur, et des dimensions contrôlées, avec une porosité réduite, contrôlée et reproductible dont dépendent les performances de la pièce composite finale.

Présentation de l'invention

A cet effet, l'invention a pour objet un procédé de fabrication d'un matériau fibreux imprégné comprenant un matériau fibreux en fibres continues et au moins une matrice polymère thermoplastique, caractérisé en ce que ledit matériau fibreux imprégné est réalisé en un ruban unique unidirectionnel ou en une pluralité de rubans parallèles unidirectionnels et caractérisé en ce que ledit procédé comprend une étape de pré-imprégnation dudit matériau fibreux se présentant sous forme d'une mèche ou de plusieurs mèches parallèles par ledit polymère thermoplastique et au moins une étape de chauffage de la matrice polymère thermoplastique permettant la fusion ou le maintien en fusion dudit polymère thermoplastique après pré-imprégnation,

ladite au moins une étape de chauffage étant effectuée au moyen d'au moins une pièce d'embarrage (E) conductrice de la chaleur et d'au moins un système de chauffage, à l'exception d'une calandre chauffante,

ladite au moins une pièce d'embarrage (E) étant thermostatée à une température comprise, pour un polymère thermoplastique semi-cristallin, de Tc-30°C à Tf+50°C dudit polymère, de préférence comprise de Tc à Tf, et pour un polymère amorphe, de Tg+50°C à Tg+250°C dudit polymère, de préférence de Tg +100°C à Tg+200°C,

ladite mèche ou lesdites mèches étant en contact avec une partie ou la totalité de la surface de ladite au moins une pièce d'embarrage (E) et défilant partiellement ou totalement à la surface de ladite au moins une pièce d'embarrage (E) présente au niveau du système de chauffage,

et le taux de porosité dans ledit matériau fibreux imprégné étant inférieur à 10%, notamment inférieur à 5%, en particulier inférieur à 2%.

La température de cristallisation et la température de fusion sont déterminées selon ISO 11357-3 (2013) et la température de transition vitreuse Tg est déterminée selon ISO 11357-2 (2013).

Avantageusement, ledit procédé est à l'exclusion de tout procédé électrostatique en charge volontaire.

Avantageusement, ledit matériau fibreux imprégné est non flexible.

L'imprégnation étant effectuée à coeur dans le procédé de l'invention, cela rend le matériau fibreux imprégné non flexible par opposition aux matériaux fibreux imprégné de l'art dans lesquels l'imprégnation est partielle, ce qui conduit à l'obtention d'un matériau fibreux flexible. Avantageusement, ledit ruban est imprégné avec un taux élevé de fibres en volume, compris de 45 à 65 % en volume, de préférence de 50 à 60% en volume, notamment de 54 à 60%.

Avantageusement, le taux de fibres en volume est constant dans au moins 70% du volume de la bande ou ruban, notamment dans au moins 80% du volume de la bande ou ruban, en particulier dans au moins 90% du volume de la bande ou ruban, plus particulièrement dans au moins 95% du volume de la bande ou ruban.

Avantageusement, la répartition des fibres est homogène dans au moins 95% du volume de la bande ou ruban.

Le terme « homogène » signifie que l'imprégnation est uniforme et qu'il n'y a pas de fibres sèches, c'est-à-dire, non imprégnée, dans au moins 95% du volume de la bande ou ruban de matériau fibreux imprégné.

La mesure du taux de fibres en volume est effectuée localement sur un volume élémentaire représentatif (VER).

Le terme « constant » signifie que le taux de fibres en volume est constant à l'incertitude de mesure près qui est de plus ou moins 1%.

L'étape de pré-imprégnation du procédé de l'invention peut être effectuée selon les techniques bien connues de l'homme du métier et notamment choisies parmi celles décrites ci-dessus si tant est que la technologie ne présente pas de problèmes liés à l'utilisation de solvants organiques ou pour des raisons environnementales et d'hygiène et sécurité des opérateurs.

Ainsi elle peut être effectuée par une technologie de pré-imprégnation par extrusion en tête d'équerre de polymère fondu, par passage en continu des fibres dans une dispersion aqueuse de poudre polymère ou dispersion aqueuse de particules de polymère ou émulsion ou suspension aqueuse de polymère, par une poudre de polymère en voie sèche, soit par dépôt de cette poudre, soit en lit fluidisé, soit par projection de cette poudre par buse ou pistolet par voie sèche dans une cuve.

L'expression « pièce d'embarrage (E)» signifie tout système sur lequel la mèche a la possibilité de défiler. La pièce d'embarrage (E) peut avoir n'importe quelle forme à partir du moment où la mèche peut défiler dessus. Elle peut être fixe ou en rotation (ou rotative), préférentiellement en rotation contrôlée.

Dans un mode de réalisation, ladite pièce d'embarrage est en rotation contrôlée, en particulier de telle manière que la vitesse linaire (autrement dit la vitesse tangentielle) à la surface de l'embarrage soit inférieure à 2 fois la vitesse de la mèche ou supérieure à 2 fois la vitesse de la mèche.

Cela signifie, pour la rotation contrôlée, que la vitesse tangentielle à la surface de l'embarrage (E) est soit égale, soit supérieure, soit inférieure à la vitesse de la mèche.

Avantageusement, la vitesse linaire (autrement dit la vitesse tangentielle) à la surface de l'embarrage est inférieure à 2 fois la vitesse de la mèche ou supérieure à 2 fois la vitesse de la mèche.

Plus avantageusement, la vitesse linaire (autrement dit la vitesse tangentielle) à la surface de l'embarrage est inférieure à 2 fois la vitesse de la mèche.

Dans un mode de réalisation, la vitesse tangentielle de l'embarrage est comprise de 0,5 à 1,5 m/ mn, la vitesse de la mèche étant comprise de 5 à 15 m/mn.

Le système de chauffage est tout système dégageant de la chaleur ou émettant un rayonnement susceptible de chauffer la pièce d'embarrage (E). La pièce d'embarrage (E) est par conséquent conductrice ou absorbe le rayonnement émis par la chaleur.

L'expression « pièce d'embarrage (E) conductrice de la chaleur » signifie que la pièce d'embarrage (E) est constituée d'un matériau capable d'absorber et de conduire la chaleur.

Ladite au moins une pièce d'embarrage (E) est située ou comprise dans l'environnement du système de chauffage, c'est-à-dire qu'elle n'est pas à l'extérieur du système de chauffage.

Ladite au moins une pièce d'embarrage (E) est donc dans sa totalité à l'intérieur du système de chauffage mais elle n'est pas nécessairement surmontée par le système de chauffage.

Avantageusement ledit système de chauffage surmonte ladite au moins une pièce d'embarrage (E). Le système de chauffage est à une hauteur suffisante pour que le polymère présent sur la mèche puisse fondre ou que sa fusion soit maintenue, en fonction de la technologie utilisée pour la pré-imprégnation, mais sans dégrader ledit polymère, et dans le cas où ladite matrice thermoplastique est semi-cristalline, bien que ladite au moins une pièce d'embarrage (E) puisse être thermostatée à une température inférieure à la température de fusion du polymère, il est bien évident que la température de ladite pièce d'embarrage permet encore de maintenir la fusion du polymère, car cette température est supérieure à la température de cristallisation de ce polymère.

Le même raisonnement s'applique aux polymères amorphes, en maintenant la température de l'embarrage suffisamment au-dessus de la Tg de ce type de polymères.

Néanmoins, ledit système de chauffage comprend soit uniquement ladite au moins une pièce d'embarrage (E) mais peut comprendre également une portion de la mèche, hors dudit système d'embarrage (E), ladite portion de mèche étant située avant et/ou après ledit système d'embarrage (E).

On ne sortirait pas du cadre de l'invention si la pièce d'embarrage (E) était positionnée dans un four comportant un système de chauffage, par exemple par IR mais que ladite pièce d'embarrage n'était pas positionnée exactement sous les éléments chauffant par exemple par IR. On ne sortirait pas de l'invention si le four comportait un mode de chauffage par convection et un système de chauffage par IR.

On ne sortirait pas de l'invention non plus si ladite pièce d'embarrage (E) placée dans ce four ou dans l'environnement de ce four, était équipée d'un moyen de chauffage autonome comme une résistance permettant de chauffer ladite pièce d'embarrage (E), indépendamment par exemple du rayonnement des lampes IR et de la convection naturelle du four et que, compte tenu la vitesse de la ligne, le polymère présent dans les rubans ou les mèches soit encore à l'état fondu lorsqu'il arrive en contact avec ladite pièce d'embarrage. La hauteur entre le système de chauffage et les embarrages est comprise de 1 à 100 cm, préférentiellement de 2 à 30 cm, en particulier de 2 à 10 cm.

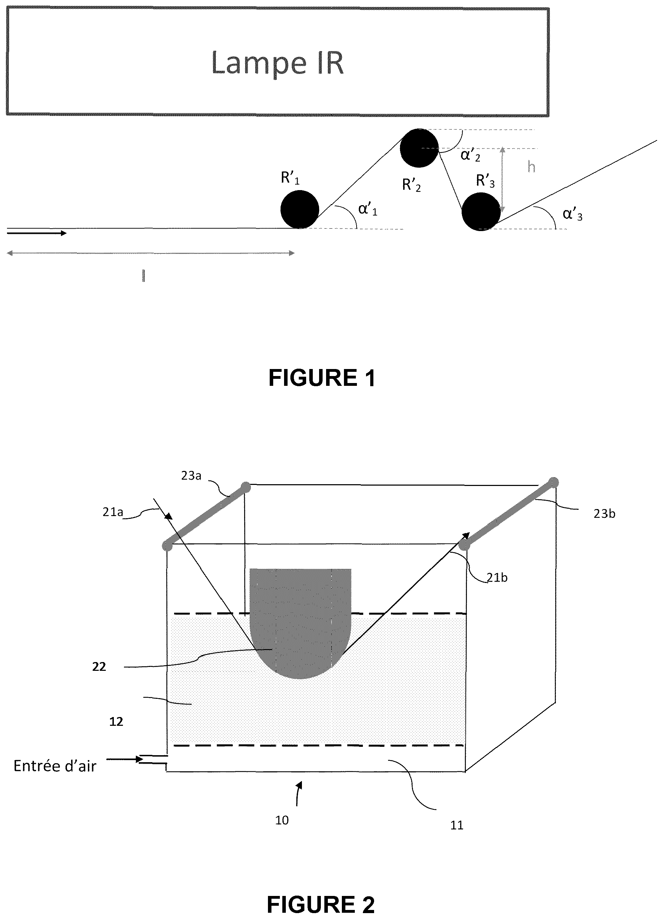

Une représentation d'un système de chauffage et de trois embarrages (E), correspondant à $R'_1$, $R'_2$ et $R'_3$, est présentée figure 1, sans être limitée en quoi que ce soit à celle-ci.

Il est bien évident qu'un second système de chauffage peut être présent sous les embarrages permettant ainsi une fusion uniforme dudit polymère sur les deux surfaces de la mèche.

Le système de chauffage représenté figure 1 est un système horizontal. Cependant, le ou les système(s) de chauffage peuvent être disposés verticalement avec défilement également vertical de la mèche au travers des embarrages.

Les Inventeurs ont donc trouvé de manière inattendue que l'étape de chauffage telle que décrite ci-dessus effectuée après l'étape de pré-imprégnation permettait, en raison du défilement partiel ou total de ladite mèche sur la ou lesdites pièce(s) d'embarrage (E), ce qui a pour effet de provoquer un épanouissement de ladite mèche au niveau du ou des rouleaux et du thermostatage dudit embarrage, d'obtenir ainsi une bonne imprégnation, homogène, avec un faible taux de porosité mais permettait également de réduire fortement l'encrassement de ces embarrages par rapport à des embarrages ou rouleaux non thermostatés et donc d'augmenter la durée de vie desdits embarrages ainsi qu'une utilisation de la ligne durant un temps supérieur à une ligne dotée d'embarrages non thermostatés.

Le système de chauffage permet donc aussi bien le chauffage de la pièce d'embarrage (E) que de la mèche pré-imprégnée par le matériau thermoplastique, ce qui va provoquer la fusion du polymère thermoplastique sur ladite mèche avant même son épanouissement et lorsque la mèche arrive au contact du premier embarrage (E ou $R'_1$ sur la figure 1), son épanouissement permet alors l'imprégnation homogène et à coeur de celle-ci par le polymère thermoplastique en fusion avec un taux de porosité très faible conduisant ainsi à un taux élevé de fibres en volume, notamment constant dans au moins 70% du volume de la bande ou ruban, notamment dans au moins 80% du volume de la bande ou ruban, en particulier dans au moins 90% du volume de la bande ou ruban, plus particulièrement dans au moins 95% du volume de la bande ou ruban.

Dans toute la description, le matériau fibreux après passage dans le lit fluidisé ou après pulvérisation par pistolet ou après la voie fondue est dénommé matériau fibreux pré-imprégné et après chauffage et/ou calandrage, il est dénommé matériau fibreux imprégné. Les mesures du taux de fibre et de la porosité sont effectuées sur le matériau fibreux imprégné, et donc après chauffage et/ou calandrage.

Le terme « homogène » signifie que l'imprégnation est uniforme et qu'il n'y a pas de fibres sèches dans le matériau fibreux imprégné.

Par fibre sèche, on entend une fibre dépourvue de polymère ou pas totalement entourée de polymère.

Par conséquent, cette étape de chauffage permet de parfaire l'imprégnation de la mèche effectuée au préalable lors de l'étape de pré-imprégnation et notamment d'obtenir une imprégnation homogène et à coeur.

Une calandre chauffante est exclue du champ de l'invention relatif audit système de chauffage.

Par calandre chauffante, il faut entendre un système de cylindres lisses ou crantés superposés entre lesquels la mèche pourrait circuler, lesdits cylindres exerçant une pression sur la dite mèche pour la lisser et effectuer sa mise en forme.

Il n'y a donc pas de mise en forme de ladite mèche au niveau de ladite étape de pre-imprégnation et de ladite étape de chauffage, en particulier pas de contrôle précis de l'épaisseur et de l'état de surface du ruban à ce stade du procédé.

L'expression « en charge volontaire » signifie qu'une différence de potentiel est appliquée entre le matériau fibreux et la poudre. La charge est notamment contrôlée et amplifiée. Les grains de poudres imprègnent alors le matériau fibreux par attraction de la poudre chargée à l'opposé de la fibre. On peut charger électriquement, négativement ou positivement, la poudre par différents moyens (différence de potentiel entre deux électrodes métalliques, frottement mécanique sur parties métalliques etc...) et charger la fibre inversement (positivement ou négativement).

Le procédé de l'invention n'exclut pas la présence de charges électrostatiques qui pourraient apparaitre par frottement du matériau fibreux sur les éléments de l'unité de mise en oeuvre avant ou au niveau de la cuve mais qui sont en tout état de cause des charges involontaires.

## Matrice polymère

On entend par thermoplastique, ou polymère thermoplastique, un matériau généralement solide à température ambiante, pouvant être semi-cristallin ou amorphe, et qui se ramollit lors d'une augmentation de température, en particulier après passage de sa température de transition vitreuse (Tg) et s'écoule à plus haute température lorsqu'il est amorphe, ou pouvant présenter une fusion franche au passage de sa température dite de fusion (Tf) lorsqu'il est semi-cristallin, et qui redevient solide lors d'une diminution de température en dessous de sa température de cristallisation (pour un semi-cristallin) et en dessous de sa température de transition vitreuse (pour un amorphe).

La Tg et la Tf sont déterminées par analyse calorimétrique différentielle (DSC) selon la norme 11357-2 :2013 et 11357-3 :2013 respectivement.

Concernant le polymère de constitution de la matrice de pré-imprégnation du matériau fibreux, c'est avantageusement un polymère thermoplastique ou un mélange de polymères thermoplastiques. Ce polymère ou mélange de polymères thermoplastiques peut être broyé sous forme de poudre, afin de pouvoir l'utiliser dans un dispositif tel qu'une cuve, notamment en lit fluidisé ou en dispersion aqueuse.

Le dispositif sous forme de cuve, notamment en lit fluidisé peut être ouvert ou fermé.

De manière facultative, le polymère thermoplastique ou mélange de polymères thermoplastiques comprend en outre des charges carbonées, en particulier du noir de carbone ou des nanocharges carbonées, de préférence choisies parmi des nanocharges carbonées, en particulier des graphènes et/ou des nanotubes de carbone et/ou des nanofibrilles de carbone ou leurs mélanges. Ces charges permettent de conduire l'électricité et la chaleur, et permettent par conséquent de faciliter la fusion de la matrice polymère lorsqu'elle est chauffée.

Optionnellement, ledit polymère thermoplastique comprend au moins un additif, notamment choisi parmi un catalyseur, un antioxydant, un stabilisant thermique, un stabilisant UV, un stabilisant à la lumière, un lubrifiant, une charge, un plastifiant, un agent ignifugeant, un agent nucléant, un allongeur de chaîne et un colorant, un agent conducteur électrique, un agent conducteur thermique ou un mélange de ceux-ci.

Avantageusement, ledit additif est choisi parmi un agent ignifugeant, un agent conducteur électrique et un agent conducteur thermique.

Selon une autre variante, le polymère thermoplastique ou mélange de polymères thermoplastiques peut en outre comprendre des polymères à cristaux liquides ou du poly(butylène téréphtalate) cyclisé, ou des mélanges en contenant, comme la résine CBT100 commercialisée par la société CYCLICS CORPORATION. Ces composés permettent notamment de fluidifier la matrice polymère à l'état fondu, pour une meilleure pénétration au coeur des fibres. Selon la nature du polymère, ou mélange de polymères thermoplastiques, utilisé pour réaliser la matrice de pré-imprégnation, notamment sa température de fusion, on choisira l'un ou l'autre de ces composés.

Les polymères thermoplastiques entrant dans la constitution de la matrice de pré-imprégnation du matériau fibreux, peuvent être choisis parmi :

- les polymères et copolymères de la famille des polyamides (PA) aliphatiques, cycloaliphatiques ou des PA semi-aromatiques (encore dénommés polyphtalamides (PPA)),

- les PEBA,
- les polyurées, en particulier aromatiques,
- les polymères et copolymères de la famille des acryliques comme les polyacrylates, et plus particulièrement le polyméthacrylate de méthyle (PMMA) ou ses dérivés
- les polymères et copolymères de la famille des poly(aryléthercétones) (PAEK) comme le poly(étheréthercétone) (PEEK), ou les poly(aryléthercétonescétones) (PAEKK) comme le poly(éthercétonecétone) (PEKK) ou leurs dérivés,
- les polyéther-imides (PEI) aromatiques,
- les polyarylsulfures, en particulier les polyphénylène sulfures (PPS),
- les polyarylsulfones, en particulier les polyphénylène sulfones (PPSU),
- les polyoléfines, en particulier le polypropylène (PP);
- l'acide polylactique (PLA),
- l'alcool polyvinylique (PVA),
- les polymères fluorés, en particulier le poly(fluorure de vinylidène) (PVDF), ou le polytétrafluoroéthylène (PTFE) ou le polychlorotrifluoroéthylène (PCTFE),

et leurs mélanges.

Avantageusement, lorsque ledit polymère est un mélange de deux polymères P1 et P2, la proportion en poids de polymère P1 et P2 est comprise de 1-99% à 99-1%.

Avantageusement, lorsque ledit polymère thermoplastique est un mélange, et que le procédé de préimprégnation utilise une poudre sèche, ce mélange se présente sous forme d'une poudre obtenue soit par « dry blend » avant introduction dans la cuve de pré-imprégnation ou par « dry blend » réalisé directement dans la cuve ou encore, par broyage d'un compound réalisé au préalable en extrudeuse.

Avantageusement, ce mélange est composé d'une poudre obtenue par « dry blend », avant l'introduction dans la cuve ou directement dans la cuve, et ce mélange de deux polymères P1 et P2 est un mélange de PEKK et de PEI.

Avantageusement, le mélange PEKK/PEI est compris de 90-10% à 60-40% en poids, en particulier de 90-10% à 70-30% en poids.

Le polymère thermoplastique peut correspondre au polymère final non réactif qui imprégnera le matériau fibreux ou à un prépolymère réactif, qui imprégnera également le matériau fibreux, mais est susceptible de réagir sur lui-même ou avec un autre prépolymère, en fonction des fins de chaîne portées par ledit prépolymère, après pré-imprégnation, ou encore avec un allongeur de chaîne et notamment lors d'un chauffage au niveau des embarrages dans le four et/ou lors de la mise en oeuvre de la tape dans le procédé final de fabrication de la pièce composite.

L'expression « polymère non réactif » signifie que le poids moléculaire n'est plus susceptible d'évoluer significativement, c'est-à-dire que sa masse moléculaire en nombre (Mn) évolue de moins de 50% lors de sa mise en oeuvre et correspond donc au polymère polyamide final de la matrice thermoplastique.

A l'opposé, l'expression « polymère réactif » signifie que le poids moléculaire dudit polymère réactif va évoluer durant la mise en oeuvre par réaction de prépolymères réactifs entre eux par condensation, substitution ou avec un allongeur de chaîne par polyaddition et sans élimination de sous-produits volatils pour conduire au polymère polyamide final (non réactif) de la matrice thermoplastique.

Selon une première possibilité, ledit prépolymère peut comprendre ou être constituée de, au moins un prépolymère (polyamide) réactif porteur sur la même chaîne (c'est-à-dire sur le même prépolymère), de deux fonctions terminales X' et Y' fonctions respectivement coréactives entre elles par condensation, plus particulièrement avec X' et Y' étant amine et carboxy ou carboxy et amine respectivement. Selon une deuxième possibilité, ledit prépolymère peut comprendre ou être constituée de, au moins deux prépolymères polyamides réactifs entre eux et porteurs chacun respectivement de deux fonctions terminales X' ou Y', identiques (identiques pour même prépolymère et différentes entre les deux prépolymères), ladite fonction X' d'un prépolymère pouvant réagir seulement avec ladite fonction Y' de l'autre prépolymère, en particulier par condensation, plus particulièrement avec X' et Y' étant amine et carboxy ou carboxy et amine respectivement.

Selon une troisième possibilité, ledit prépolymère peut comprendre ou être constituée de, au moins un prépolymère dudit polymère polyamide thermoplastique, porteur de n fonctions réactives terminales X, choisies parmi : -NH2, -CO2H et -OH, de préférence NH2 et -CO2H avec n étant 1 à 3, de préférence de 1 à 2, plus préférentiellement 1 ou 2, plus particulièrement 2 et au moins un allongeur de chaîne Y-A'-Y, avec A' étant un biradical hydrocarboné, porteur de 2 fonctions réactives terminales Y identiques, réactives par polyaddition avec au moins une fonction X dudit prépolymère a1), de préférence de masse moléculaire inférieure à 500, plus préférentiellement inférieure à 400.

La masse moléculaire moyenne en nombre Mn dudit polymère final de la matrice thermoplastique est de préférence dans une plage allant de 10000 à 40000, de préférence de 12000 à 30000. Ces valeurs Mn peuvent correspondre à des viscosités inhérentes supérieures ou égales à 0,8 telle que déterminées dans le m-crésol selon la norme ISO 307:2007 mais en changeant le solvant (utilisation du m-crésol à la place de l'acide sulfurique et la température étant de 20°C).

Lesdits prépolymères réactifs selon les deux options citées plus haut, ont une masse moléculaire moyenne en nombre Mn allant de 500 à 10000, de préférence de 1000 à 6000, en particulier de 2500 à 6000.

Les Mn sont déterminées en particulier par le calcul à partir du taux des fonctions terminales déterminé par titration potentiométrique en solution et la fonctionnalité desdits prépolymères. Les masses Mn peuvent également être déterminées par chromatographie d'exclusion stérique ou par RMN.

La nomenclature utilisée pour définir les polyamides est décrite dans la norme ISO 1874-1:2011 "Plastiques - Matériaux polyamides (PA) pour moulage et extrusion - Partie 1 : Désignation", notamment en page 3 (tableaux 1 et 2) et est bien connue de l'homme du métier.

Le polyamide peut être un homopolyamide ou un copolyamide ou un mélange de ceux-ci.

Avantageusement, les prépolymères de constitution de la matrice sont choisis parmi les Polyamides (PA), en particulier choisis parmi les polyamides aliphatiques, les polyamides cycloaliphatiques, et les polyamides semi-aromatiques (polyphthalamides) éventuellement modifiés par des motifs urées, et leur copolymères, le Polyméthacrylate de méthyle (PPMA) et ses copolymères, les Polyether imides (PEI), le Poly(sulfure de phénylène) (PPS), le Poly(sulfone de phénylène) (PPSU), le PVDF, le Poly(éthercétonecétone) (PEKK), le Poly(étheréthercétone) (PEEK), les polymères fluorés comme le poly(fluorure de vinylidène) (PVDF).

Pour les polymères fluorés, on peut utiliser un homopolymère du fluorure de vinylidène (VDF de formule $CH_2=CF_2$) ou un copolymère du VDF comprenant en poids au moins 50% en masse de VDF et au moins un autre monomère copolymérisable avec le VDF. La teneur en VDF doit être supérieure à 80% en masse, voire mieux 90% en masse, pour assurer une bonne résistance mécanique et chimique à la pièce de structure, surtout lorsqu'elle est soumise à des contraintes thermiques et chimiques. Le comonomère peut être un monomère fluoré tel que par exemple le fluorure de vinyle.

Pour des pièces de structure devant résister à des températures élevées, outre les polymères fluorés, on utilise avantageusement selon l'invention les PAEK (PolyArylEtherKetone) tels que les poly(éther cétones) PEK, le poly(éther éther cétone) PEEK, le poly(éther cétone cétone) PEKK, le Poly(éther cétone éther cétone cétone) PEKEKK ou les PA de haute température de transition vitreuse Tg).

Avantageusement, ledit polymère thermoplastique est un polymère dont la température de transition vitreuse est telle que Tg ≥ 80°C, notamment ≥ 100°C, en particulier ≥ 120°C, notamment ≥ 140°C, ou un polymère semi-cristallin dont la température de fusion Tf ≥ 150°C. Avantageusement, ledit au moins un prépolymère thermoplastique est sélectionné parmi les polyamides, le PEKK, le PEI et un mélange PEKK et de PEI.

Avantageusement, ledit polyamide est choisi parmi les polyamides aliphatiques, les polyamides cycloaliphatiques et les polyamides semi-aromatiques (polyphthalamides).

Avantageusement, ledit prépolymère polyamide aliphatique est choisi parmi :

- le polyamide 6 (PA-6), le polyamide 11 (PA-11), le polyamide 12 (PA-12), le polyamide 66 (PA-66), le polyamide 46 (PA-46), le polyamide 610 (PA-610), le polyamide 612 (PA-612), le polyamide 1010 (PA-1010), le polyamide 1012 (PA-1012), le polyamide 11/1010 et le polyamide 12/1010, ou un mélange de ceux-ci ou un copolyamide de ceux-ci, et les copolymères blocs, notamment polyamide/polyéther (PEBA), et ledit polyamide semi-aromatique est un polyamide semi-aromatique, éventuellement modifié par des unités urées, notamment un PA MXD6 et un PA MXD10 ou un polyamide semi-aromatique de formule X/YAr, tel que décrits dans EP1505099, notamment un polyamide semi-aromatique de formule A/XT dans laquelle A est choisi parmi un motif obtenu à partir d'un aminoacide, un motif obtenu à partir d'un lactame et un motif répondant à la formule (diamine en Ca).(diacide en Cb), avec a représentant le nombre d'atomes de carbone de la diamine et b représentant le nombre d'atome de carbone du diacide, a et b étant chacun compris entre 4 et 36, avantageusement entre 9 et 18, le motif (diamine en Ca) étant choisi parmi les diamines aliphatiques, linéaires ou ramifiés, les diamines cycloaliphatiques et les diamines alkylaromatiques et le motif (diacide en Cb) étant choisi parmi les diacides aliphatiques, linéaires ou ramifiés, les diacides cycloaliphatiques et les diacides aromatiques;
  X.T désigne un motif obtenu à partir de la polycondensation d'une diamine en Cx et de l'acide téréphtalique, avec x représentant le nombre d'atomes de carbone de la diamine en Cx, x étant compris entre 6 et 36, avantageusement entre 9 et 18, notamment un polyamide de formule A/6T, A/9T, A/10T ou A/11T, A étant tel que défini ci-dessus, en particulier un polyamide PA 6/6T, un PA 66/6T, un PA 6I/6T, un PA MPMDT/6T, un PA PA11/10T, un PA 11/6T/10T, un PA MXDT/10T, un PA MPMDT/10T, un PA BACT/10T, un PA BACT/6T, PA BACT/10T/6T, PA BACT/10T/11, PA BACT/6T/11.
  T correspond à l'acide téréphtalique, MXD correspond à la m-xylylène diamine, MPMD correspond à la méthylpentaméthylène diamine et BAC correspond au bis(aminométhyl)cyclohexane.

Avantageusement, le polymère thermoplastique est un polyamide semi-aromatique.

Avantageusement, le polymère thermoplastique est un polyamide semi-aromatique choisi parmi un PA MPMDT/6T, un PA PA11/10T, un PA 11/6T/10T, un PA MXDT/10T, un PA MPMDT/10T, un PA BACT/10T, un PA BACT/6T, PA BACT/10T/6T, PA BACT/10T/11, PA BACT/6T/11.

**Matériau fibreux** :

Concernant les fibres de constitution dudit matériau fibreux, ce sont notamment des fibres d'origine minérale, organique ou végétale. Parmi les fibres d'origine minérale, on peut citer les fibres de carbone, les fibres de verre, les fibres de basalte, les fibres de silice, ou les fibres de carbure de silicium par exemple. Parmi les fibres d'origine organique, on peut citer les fibres à base de polymère thermoplastique ou thermodurcissable, telles que des fibres de polyamides semi-aromatiques, des fibres d'aramide ou des fibres en polyoléfines par exemple. De préférence, elles sont à base de polymère thermoplastique amorphe et présentent une température de transition vitreuse Tg supérieure à la Tg du polymère ou mélange de polymère thermoplastique de constitution de la matrice de pré-imprégnation lorsque ce dernier est amorphe, ou supérieure à la Tf du polymère ou mélange de polymère thermoplastique de constitution de la matrice de pré-imprégnation lorsque ce dernier est semi-cristallin. Avantageusement, elles sont à base de polymère thermoplastique semi-cristallin et présentent une température de fusion Tf supérieure à la Tg du polymère ou mélange de polymère thermoplastique de constitution de la matrice de pré-imprégnation lorsque ce dernier est amorphe, ou supérieure à la Tf du polymère ou mélange de polymère thermoplastique de constitution de la matrice de pré-imprégnation lorsque ce dernier est semi-cristallin. Ainsi, il n'y a aucun risque de fusion pour les fibres organiques de constitution du matériau fibreux lors de l'imprégnation par la matrice thermoplastique du composite final. Parmi les fibres d'origine végétale, on peut citer les fibres naturelles à base de lin, de chanvre, de lignine, de bambou, de soie notamment d'araignée, de sisal, et d'autres fibres cellulosiques, en particulier de viscose. Ces fibres d'origine végétale peuvent être utilisées pures, traitées ou bien enduites d'une couche d'enduction, en vue de faciliter l'adhérence et l'imprégnation de la matrice de polymère thermoplastique.

Le matériau fibreux peut également être un tissu, tressé ou tissé avec des fibres.

Il peut également correspondre à des fibres avec des fils de maintien.

Ces fibres de constitution peuvent être utilisées seules ou en mélanges. Ainsi, des fibres organiques peuvent être mélangées aux fibres minérales pour être pré-imprégnée de polymère thermoplastique et former le matériau fibreux pré-imprégné.

Les mèches de fibres organiques peuvent avoir plusieurs grammages. Elles peuvent en outre présenter plusieurs géométries. Les fibres peuvent se présenter sous forme de fibres coupées, qui composent alors les feutres ou les mats pouvant se présenter sous la forme de bandes, nappes, ou morceaux, ou sous forme de fibres continues, qui composent les tissus 2D, les non-tissés (NCF), les tresses ou mèches de fibres unidirectionnelles (UD) ou non tissées. Les fibres de constitution du matériau fibreux peuvent en outre se présenter sous forme d'un mélange de ces fibres de renfort de différentes géométries. De préférence, les fibres sont continues.

De préférence le matériau fibreux est constitué par des fibres continues de carbone, de verre ou de carbure de silicium ou leur mélange, en particulier des fibres de carbone. Il est utilisé sous forme d'une mèche ou de plusieurs mèches.

Dans les matériaux imprégnés aussi appelés « prêts à l'emploi », le polymère ou mélange de polymères thermoplastiques d'imprégnation est réparti uniformément et de manière homogène autour des fibres. Dans ce type de matériau, le polymère thermoplastique d'imprégnation doit être réparti de manière la plus homogène possible au sein des fibres afin d'obtenir un minimum de porosités, c'est à dire un minimum de vides entre les fibres. En effet, la présence de porosités dans ce type de matériaux peut agir comme des points de concentrations de contraintes, lors d'une mise sous contrainte mécanique de traction par exemple, et qui forment alors des points d'initiation de rupture du matériau fibreux imprégné et le fragilisent mécaniquement. Une répartition homogène du polymère ou mélange de polymères améliore donc la tenue mécanique et l'homogénéité du matériau composite formé à partir de ces matériaux fibreux imprégnés.

Ainsi, dans le cas de matériaux imprégnés dits « prêts à l'emploi », le taux de fibres dans ledit matériau fibreux imprégné est compris de 45 à 65 % en volume, de préférence de 50 à 60% en volume, notamment de 54 à 60% en volume.

La mesure du taux d'imprégnation peut être réalisée par analyse d'image (utilisation de microscope ou d'appareil photo ou de caméra numérique, notamment), d'une coupe transversale du ruban, en divisant la surface du ruban imprégné par le polymère par la surface totale du produit (surface imprégnée plus surface des porosités). Afin d'obtenir une image de bonne qualité il est préférable d'enrober le ruban découpé dans son sens transversal dans une résine de polissage standard et de polir avec un protocole standard permettant l'observation de l'échantillon au microscope grossissement fois 6 au minimum.

Avantageusement, le taux de porosité dudit matériau fibreux imprégné est inférieur à 10%, notamment inférieur à 5%, en particulier inférieur à 2%.

Il faut noter qu'un taux de porosité nul est difficilement accessible et que par conséquent, avantageusement le taux de porosité est supérieur à 0% mais inférieur aux taux cités ci-dessus.

Le taux de porosité correspond au taux de porosité fermée et peut être déterminée soit par microscopie électronique, soit comme étant l'écart relatif entre la densité théorique et la densité expérimentale dudit matériau fibreux imprégné tel que décrit dans la partie exemples de la présente invention.

**Etape de pré-imprégnation** :

L'étape de pré-imprégnation comme déjà indiquée ci-dessus peut être effectuée selon les techniques bien connues de l'homme du métier et notamment choisies parmi celles décrites ci-dessus.

Dans un mode de réalisation avantageux, l'étape de pré-imprégnation est effectuée avec un système choisi parmi un lit fluidisé, une pulvérisation par pistolet et la voie fondue, notamment à grande vitesse, en particulier l'imprégnation est effectuée en lit fluidisé.

Avantageusement, la pré-imprégnation est effectuée avec un système choisi parmi un lit fluidisé, une pulvérisation par pistolet et la voie fondue, notamment à grande vitesse, en particulier l'imprégnation est effectuée en lit fluidisé et une ou plusieurs pièce(s) d'embarrage(s) (E") est(sont) présente(s) en amont dudit système.

Il faut noter que les pièces d'embarrage (E) et (E") peuvent être identiques ou différentes que ce soit au niveau du matériau ou de la forme et ses caractéristiques (diamètre, longueur, largeur, hauteur ... en fonction de la forme).

**Voie fondue** :

Avantageusement l'étape de pré-imprégnation est effectuée par voie fondue, notamment par pultrusion.

Les technique de pré-imprégnation par voie fondue sont bien connues de l'homme du métier et sont décrites dans les références ci-dessus.

L'étape de pré-imprégnation est effectué notamment par extrusion en tête d'équerre de la matrice polymère et passage de ladite mèche ou desdites mèches dans cette tête d'équerre puis passage dans une filière chauffée, la tête d'équerre étant éventuellement munie d'embarrages fixes ou rotatifs sur lesquels la mèche défile provoquant ainsi un épanouissement de ladite mèche permettant une pré-imprégnation de ladite mèche.

La pré-imprégnation peut notamment être effectuée telle que décrite dans US 2014/0005331A1 à la différence que l'alimentation en résine est effectuée des deux côtés de ladite mèche et qu'il n'existe pas de surface de contact éliminant une partie de la résine sur l'une des deux surfaces.

Avantageusement, l'étape de pré-imprégnation est effectuée par voie fondue à grande vitesse, c'est-à-dire avec une vitesse de défilement de ladite mèche ou desdites mèches supérieure ou égale à 5m/min, en particulier supérieure à 9 m/min.

L'un des autres avantages de l'invention à combiner une étape de pré-imprégnation et une étape de chauffage dans le cadre d'une pré-imprégnation par voie fondue est que le taux de fibres imprégné après l'étape de chauffage est compris de 45% à 64% en volume, de préférence de 50 à 60% en volume, en particulier de 54 à 60% en volume, ledit taux de fibres ne pouvant être atteint par les techniques classiques de voie fondue. Cela permet en outre de travailler avec des grandes vitesses de défilement et de diminuer ainsi les coûts de production.

**Lit fluidisé** :

Avantageusement, l'étape de pré-imprégnation est effectuée en lit fluidisé.

Un exemple d'unité de mise en oeuvre d'un procédé de fabrication sans l'étape de chauffage au moyen d'au moins une pièce d'embarrage est décrit dans la demande internationale WO 2015/121583.

Ce système décrit l'utilisation d'une cuve comprenant un lit fluidisé pour effectuer l'étape de pré-imprégnation et peut être utilisé dans le cadre de l'invention.

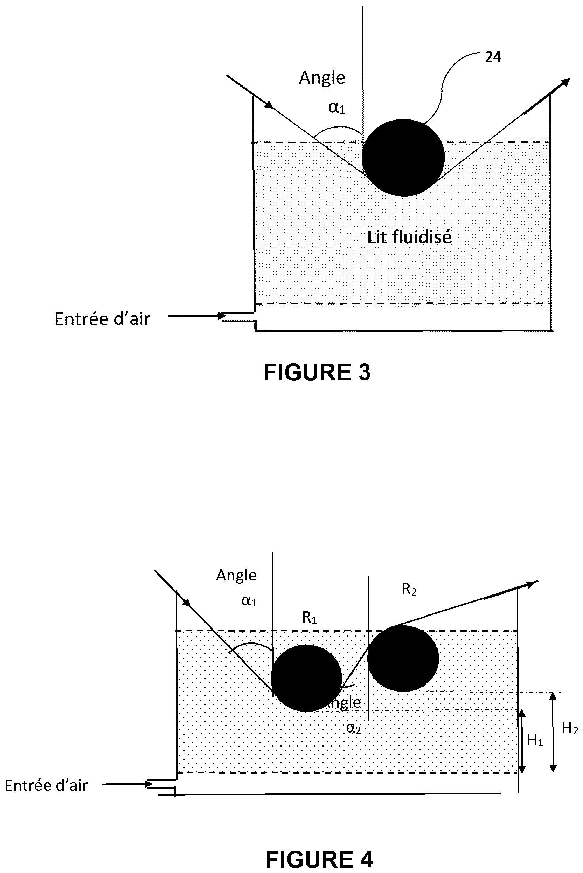

Avantageusement, la cuve comprenant le lit fluidisé est munie d'au moins une pièce d'embarrage (E') (figure 2) qui peut être un rouleau de compression (figure 3)).

Il faut noter que les pièces d'embarrage (E) et (E') peuvent être identiques ou différentes que ce soit au niveau du matériau ou de la forme et ses caractéristiques (diamètre, longueur, largeur, hauteur ... en fonction de la forme).

Cependant, la pièce d'embarrage (E') n'est ni chauffante ni chauffée.

L'étape de pré-imprégnation du matériau fibreux est réalisée par passage d'une ou plusieurs mèches dans un dispositif de pré-imprégnation en continu, comprenant une cuve (10) muni d'au moins une pièce d'embarrage (E') et comprenant un lit fluidisé (12) de poudre de ladite matrice polymère.

La poudre de ladite matrice polymère ou polymère est mise en suspension dans un gaz G (de l'air par exemple) introduit dans la cuve et circulant dans la cuve (10) à travers une trémie (11). La ou les mèches sont mises en circulation dans ce lit fluidisé (12).

La cuve peut avoir toute forme, notamment cylindrique ou parallélépipédique, en particulier un parallélépipède rectangle ou un cube, avantageusement un parallélépipède rectangle.

La cuve (10) peut être une cuve ouverte ou fermée. Avantageusement, elle est ouverte.

Dans le cas où la cuve est fermée, elle est alors équipée d'un système d'étanchéité pour que la poudre de ladite matrice polymère ne puisse pas sortir de ladite cuve.

Cette étape de pré-imprégnation est donc effectuée par voie sèche, c'est à dire que la matrice polymère thermoplastique est sous forme de poudre, notamment en suspension dans un gaz, en particulier de l'air, mais ne peut pas être en dispersion dans un solvant ou dans l'eau. Chaque mèche à pré-imprégner est déroulée d'un dispositif à dévidoirs sous la traction engendrée par des cylindres (non représentés). De préférence, le dispositif à dévidoirs comprend une pluralité de dévidoirs, chaque dévidoir permettant de dérouler une mèche à pré-imprégner. Ainsi, il est possible de pré-imprégner plusieurs mèches de fibres simultanément. Chaque dévidoir est pourvu d'un frein (non représenté) de manière à appliquer une tension sur chaque mèche de fibres. Dans ce cas, un module d'alignement permet de disposer les mèches de fibres parallèlement les unes par rapport aux autres. De cette manière les mèches de fibres ne peuvent pas être en contact les unes avec les autres, ce qui permet d'éviter une dégradation mécanique des fibres par frottement entre elles.

La mèche de fibres ou les mèches de fibres parallèles passent alors dans une cuve (10), comprenant en particulier un lit fluidisé (12), munie d'une pièce d'embarrage (E') qui est un rouleau de compression (24) dans le cas de la figure 3. La mèche de fibres ou les mèches de fibres parallèles ressort(ent) ensuite de la cuve après pré-imprégnation après contrôle éventuel du temps de séjour dans la poudre.

L'expression « temps de séjour dans la poudre » signifie le temps durant lequel la mèche est en contact avec ladite poudre dans le lit fluidisé.

Le procédé selon l'invention comprend donc un premier épanouissement lors de l'étape de pré-imprégnation.

L'utilisation d'au moins un embarrage (E') dans l'étape de pré-imprégnation permet donc une pré-imprégnation améliorée par rapport aux procédés de l'art antérieur.

Par pièce d'embarrage (E'), il faut entendre tout système sur lequel la mèche a la possibilité de défiler dans la cuve. La pièce d'embarrage (E') peut avoir n'importe quelle forme à partir du moment où la mèche peut défiler dessus.

Un exemple de pièce d'embarrage (E'), sans restreindre l'invention à celui-ci, est détaillé dans la figure 2.

Cette pré-imprégnation est réalisée afin de permettre à la poudre de ladite matrice polymère de pénétrer dans la mèche de fibre et d'adhérer aux fibres suffisamment pour supporter le transport de la mèche poudrée hors de la cuve.

Si le matériau fibreux, tel que les mèches de fibres de verre ou de carbone, présente un ensimage, une étape optionnelle de dé-ensimage peut être effectuée avant le passage du matériau fibreux dans la cuve. Le terme« ensimage » désigne les traitements de surface appliqués aux fibres de renfort en sortie de filière (ensimage textile) et sur les tissus (ensimage plastique).

L'ensimage "textile" appliqué sur les fibres, en sortie de filière consiste à déposer un agent de liaison assurant la cohésion des fibres entre elles, diminuant l'abrasion et facilitant les manipulations ultérieures (tissage, drapage, tricotage) et évitant la formation de charges électrostatiques.

L'ensimage "plastique" ou "finish" appliqué sur les tissus consiste à déposer un agent de pontage dont les rôles sont d'assurer une liaison physico-chimique entre les fibres et la résine et de protéger la fibre de son environnement.

Avantageusement, l'étape de pré-imprégnation est effectuée en lit fluidisé avec contrôle du temps de séjour dans la poudre est compris de 0,01s à 10s, préférentiellement de 0,1s à 5s, et en particulier de 0,1s à 3s.

Le temps de séjour du matériau fibreux dans la poudre est essentiel à la pré-imprégnation dudit matériau fibreux.

En deçà de 0,1s, le taux de résine sera trop faible pour ensuite, lors de l'étape de fusion de la poudre, pouvoir imprégner à coeur les fibres.

Au-delà de 10s, le taux de matrice polymère imprégnant le matériau fibreux est trop important et les propriétés mécaniques du matériau fibreux imprégné seront mauvaises. Avantageusement, la cuve utilisée dans le procédé de l'invention comprend un lit fluidisé et ladite étape de pré-imprégnation est effectuée avec un épanouissement simultané de ladite mèche ou desdites mèches entre l'entrée et la sortie de la cuve comprenant ledit lit fluidisé.

L'expression « entrée de la cuve » correspond à la tangente verticale du bord de la cuve qui comprend le lit fluidisé.

L'expression « sortie de la cuve » correspond à la tangente verticale de l'autre bord de la cuve qui comprend le lit fluidisé.

En fonction de la géométrie de la cuve, la distance entre l'entrée et la sortie de celle-ci correspond donc au diamètre dans le cas d'une cuve cylindrique, au côté dans le cas d'une cuve cubique ou à la largeur ou la longueur dans le cas d'une cuve parallélépipédique rectangle. L'épanouissement consiste à singulariser au maximum chaque fibre constituant ladite mèche des autres fibres qui l'entourent dans son plus proche espace. Il correspond à l'étalement transverse de la mèche.

En d'autres termes, l'étalement transverse ou la largeur de la mèche augmente entre l'entrée du lit fluidisé (ou de la cuve comprenant le lit fluidisé) et la sortie du lit fluidisé (ou de la cuve comprenant le lit fluidisé) et permet ainsi une pré-imprégnation améliorée du matériau fibreux.

Le lit fluidisé peut être ouvert ou fermé, en particulier il est ouvert.

Avantageusement, le lit fluidisé comprend au moins une pièce d'embarrage (E'), ladite mèche ou lesdites mèches étant en contact avec une partie ou la totalité de la surface de ladite au moins une pièce d'embarrage (E').

La figure 2 détaille une cuve (10) comprenant un lit fluidisé (12) avec une pièce d'embarrage (E'), réglable en hauteur (22).

La mèche (21a) correspond à la mèche avant pré-imprégnation qui est en contact avec une partie ou la totalité de la surface de ladite au moins une pièce d'embarrage (E') et défile donc partiellement ou totalement à la surface de la pièce d'embarrage (E') (22), ledit système (22) étant immergé dans le lit fluidisé où la pré-imprégnation s'effectue. Ladite mèche ressort ensuite de la cuve (21b) après contrôle du temps de séjour dans la poudre.

La dite mèche (21a) peut être en contact ou non avec le bord de la cuve (23a) qui peut être un rouleau rotatif ou fixe ou un bord parallélépipédique.

Avantageusement, la dite mèche (21a) est en contact ou non avec le bord d'entrée de la cuve (23a).

Avantageusement, le bord de sortie de la cuve (23b) est un rouleau, notamment cylindrique et rotatif.

La dite mèche (21b) peut être en contact ou non avec le bord de sortie de la cuve (23b) qui peut être un rouleau, notamment cylindrique et rotatif ou fixe, ou un bord parallélépipédique. Avantageusement, la dite mèche (21b) est en contact avec le bord de sortie de la cuve (23b). Avantageusement, le bord de sortie de la cuve (23b) est un rouleau, notamment cylindrique et rotatif.

Avantageusement, la dite mèche (21a) est en contact avec le bord d'entrée de la cuve (23a) et le bord de sortie de la cuve (23b) est un rouleau, notamment cylindrique et rotatif et la dite mèche (21b) est en contact avec le bord de sortie de la cuve (23b), et le bord de sortie de la cuve (23b) est un rouleau, notamment cylindrique et rotatif.

Avantageusement, ladite pièce d'embarrage (E') est perpendiculaire à la direction de ladite mèche ou desdites mèches.

Ladite pièce d'embarrage (E') peut être fixe ou en rotation.

Avantageusement, ledit épanouissement de ladite mèche ou desdites mèches est effectué au moins au niveau de ladite au moins une pièce d'embarrage (E').

L'épanouissement de la mèche s'effectue donc principalement au niveau de la pièce d'embarrage (E') mais peut également s'effectuer au niveau du ou des bords de la cuve s'il y a contact entre la mèche et ledit bord.

Dans un autre mode de réalisation, ladite au moins une pièce d'embarrage (E') est un rouleau de compression de forme convexe, concave ou cylindrique, de préférence cylindrique.

La forme convexe est favorable à l'épanouissement alors que la forme concave est défavorable à l'épanouissement bien qu'il s'effectue néanmoins.

L'expression « rouleau de compression » signifie que la mèche qui défile s'appuie partiellement ou totalement sur la surface dudit rouleau de compression, ce qui induit l'épanouissement de la dite mèche.

Avantageusement, ledit au moins un rouleau de compression est de forme cylindrique et le pourcentage d'épanouissement de ladite mèche ou desdites mèches entre l'entrée et la sortie de la cuve dudit lit fluidisé est compris de 100% à 1000%, préférentiellement de 100% à 800% préférentiellement de 100% à 500%, préférentiellement de 100% à 200%.

Le pourcentage d'épanouissement est égal au rapport de la largeur finale de la mèche sur la largeur initiale de la mèche multiplié par 100.

L'épanouissement est fonction du matériau fibreux utilisé. Par exemple, l'épanouissement d'un matériau en fibre de carbone est beaucoup plus important que celui d'une fibre de lin.

L'épanouissement est aussi fonction du nombre de fibres dans la mèche, de leur diamètre moyen et de leur cohésion de par l'ensimage.

Le diamètre dudit au moins un rouleau de compression est compris de 3 mm à 500 mm, préférentiellement de 10 mm à 100 mm, en particulier de 20 mm à 60 mm.

Au-dessous de 3 mm, la déformation de la fibre induite par le rouleau de compression est trop importante.

Avantageusement, le rouleau de compression est cylindrique et non cannelé et en particulier est métallique.

Lorsque la pièce d'embarrage (E') est au moins un rouleau de compression, selon une première variante, un seul rouleau de compression est présent dans le lit fluidisé et ladite pré-imprégnation est effectuée au niveau de l'angle $\alpha_1$ formé par ladite mèche ou lesdites mèches entre l'entrée dudit rouleau de compression et la tangente verticale audit rouleau de compression.

L'angle $\alpha_1$ formé par ladite mèche ou lesdites mèches entre l'entrée dudit rouleau de compression et la tangente verticale audit rouleau de compression permet la formation d'une zone dans laquelle la poudre va se concentrer conduisant ainsi à un « effet de coin » qui avec l'épanouissement simultané de la mèche par ledit rouleau de compression permet une pré-imprégnation sur une largeur plus importante de mèche et donc une pré-imprégnation améliorée comparée aux techniques de l'art antérieur améliorée.

Dans toute la description, toutes les valeurs d'angle données sont exprimées en valeurs absolue.

Avantageusement, l'angle $\alpha_1$ est compris de 0 à 89°, préférentiellement 5° à 85°, préférentiellement de 5° à 45°, préférentiellement de 5° à 30°.Néanmoins, un angle $\alpha_1$ compris de 0 à 5° est susceptible d'engendrer des risques de sollicitation mécanique, ce qui conduira à la casse des fibres et un angle $\alpha_1$ compris de 85° à 89° ne crée pas suffisamment d'effort mécanique pour créer « l'effet de coin ». Une valeur de l'angle $\alpha_1$ égale à 0° correspond donc à une fibre verticale. Il est bien évident que la hauteur du rouleau de compression cylindrique est réglable permettant ainsi de pouvoir positionner la fibre verticalement. On ne sortirait pas du cadre de l'invention si la paroi de la cuve était percée de manière à pouvoir permettre la sortie de la mèche. Avantageusement, le bord d'entrée de la cuve (23a) est équipé d'un rouleau, notamment cylindrique et rotatif sur lequel défile ladite mèche ou les dites mèches conduisant ainsi à un épanouissement préalable à la pré-imprégnation.

Dans un mode de réalisation, l'épanouissement est initié au niveau du bord d'entrée de la cuve (23a) et se poursuit au niveau du ou desdits embarrages (E') ci-dessus définis. Dans un autre mode de réalisation, un ou plusieurs embarrages (E") sont présents en amont de la cuve comprenant le lit fluidisé au niveau duquel ou desquels l'épanouissement est initié.

Les embarrages (E") sont tels que définis pour (E) en ce qui concerne le matériau, la forme et ses caractéristiques (diamètre, longueur, largeur, hauteur... en fonction de la forme).

Avantageusement, les embarrages (E") sont des rouleaux cylindriques et non cannelé et en particulier est métallique.

Avantageusement, le diamètre dudit au moins un rouleau de compression est compris de 3 mm à 500 mm, préférentiellement de 10 mm à 100 mm, en particulier de 20 mm à 60 mm.

Au-dessous de 3 mm, la déformation de la fibre induite par le rouleau de compression est trop importante.

Avantageusement, ladite au moins une pièce d'embarrage (E") est constituée de 1 à 15 rouleaux de compression ($R'''_1$ à $R'''_{15}$) de forme cylindrique, préférentiellement de 3 à 15 rouleaux de compression ($R'''_3$ à $R'''_{15}$), notamment de 3 à 6 rouleaux de compression ($R'''_3$ à $R'''_6$).

Avantageusement, ladite mèche ou lesdites mèches forme(nt) un angle $\alpha'''_1$ de 0,1 à 89°, en particulier de 5 à 75°, notamment de 10 à 45° avec un premier rouleau de compression $R'''_1$ et la tangente horizontale audit rouleau de compression $R'''_1$, ladite mèche ou lesdites mèches s'épanouissant au contact dudit rouleau de compression $R'''_1$.

On ne sortirait du cadre de l'invention si la mèche formait un angle avec ladite tangente horizontale audit rouleau de compression $R'''_1$ compris de plus de 89° à 360° (modulo 360°). Dans le cas où la mèche forme un angle d'au moins 360° avec ladite tangente horizontale audit rouleau de compression $R'''_1$, cela signifie que la mèche a effectué au moins un tour complet dudit rouleau.

Selon une deuxième variante, ladite au moins une pièce d'embarrage (E) est constituée de deux rouleaux de compression, en particulier de forme cylindrique.

Avantageusement, ladite mèche ou lesdites mèches forme(nt) un angle $\alpha'''_1$ de 0 à 180°, en particulier de 5 à 75°, notamment de 10 à 45° avec un premier rouleau de compression $R'''_1$ et la tangente horizontale audit rouleau de compression $R'''_1$, ladite mèche ou lesdites mèches s'épanouissant au contact dudit rouleau de compression $R'''_1$.

On ne sortirait du cadre de l'invention si la mèche formait un angle avec ladite tangente horizontale audit rouleau de compression $R'''_1$ compris de plus de 180° à 360° (modulo 360°). Dans le cas où la mèche forme un angle d'au moins 360° avec ladite tangente horizontale audit rouleau de compression $R'''_1$, cela signifie que la mèche a effectué au moins un tour complet dudit rouleau.

Avantageusement, ladite mèche ou lesdites mèches forme un angle $\alpha'''_2$ de 0 à 180°, en particulier de 5 à 75°, notamment de 10 à 45° avec le deuxième rouleau de compression $R'_2$ et la tangente horizontale audit rouleau de compression $R'_2$, ladite mèche ou lesdites mèches s'épanouissant au contact dudit deuxième rouleau de compression.

On ne sortirait du cadre de l'invention si la mèche formait un angle avec ladite tangente horizontale audit rouleau de compression $R'_2$ compris de plus de 180° à 360° (modulo 360°). Dans le cas où la mèche forme un angle d'au moins 360° avec ladite tangente horizontale audit rouleau de compression $R'_2$, cela signifie que la mèche a effectué au moins un tour complet dudit rouleau.

De manière générale, l'angle ou les angles $\alpha'''_{3-i}$ (i étant de 3 à 15) formé par ladite ou lesdites mèches avec les rouleaux $R'''_{3-i}$ est(sont) compris de 0 à 180°, en particulier de 5 à 75°, notamment de 10 à 45°.

On ne sortirait du cadre de l'invention si la mèche formait un angle avec ladite tangente horizontale audit rouleau de compression $R'''_{3-i}$ compris de plus de 180° à 360° (modulo 360°).

Dans le cas où la mèche forme un angle d'au moins 360° avec ladite tangente horizontale audit rouleau de compression $R'_{3-i}$, cela signifie que la mèche a effectué au moins un tour complet dudit rouleau.

De manière générale, la différence de hauteur entre chaque rouleau $R'''_i$ et entre le rouleau le plus bas et le rouleau le plus haut est supérieure ou égale à 0.

Avantageusement, la différence de hauteur entre chacun des rouleaux $R'''_i$ est comprise de 1 à 20 cm, préférentiellement de 2 à 15 cm.

De manière générale, la distance entre chacun des rouleaux $R'_i$ est supérieure à 0, et en particulier est comprise de 1 à 50 cm, préférentiellement de 2 à 30 cm, en particulier de 3 à 20 cm.

Avantageusement, l'épanouissement est initié au niveau du ou desdits embarrages (E") ci-dessus définis et se poursuit éventuellement au niveau du bord d'entrée de la cuve puis au niveau du ou desdits embarrages (E') ci-dessus définis.

L'épanouissement est alors maximum après passage au niveau du ou des rouleaux de compression (E').

Avantageusement, le pourcentage d'épanouissement de ladite mèche ou desdites mèches entre l'entrée des embarrages (E") et la sortie de la cuve dudit lit fluidisé est compris de 100% à 1000%, préférentiellement de 100% à 800% préférentiellement de 100% à 500%, préférentiellement de 100% à 200%. Le pourcentage d'épanouissement est égal au rapport de la largeur finale de la mèche sur la largeur initiale de la mèche multiplié par 100.

Avantageusement, le pourcentage d'épanouissement de ladite mèche ou desdites mèches entre l'entrée et la sortie des embarrages (E") est compris de 100% à 1000%, préférentiellement de 100% à 800% préférentiellement de 200% à 800%, préférentiellement de 400% à 800%.

La figure 3 décrit un mode de réalisation, sans être limité à celui-ci, à un seul rouleau de compression (24) ou ($R_1$), avec une cuve (10) comprenant un lit fluidisé (12) dans lequel un seul rouleau de compression cylindrique est présent et montrant l'angle $\alpha_1$.

Les flèches au niveau de la fibre indiquent le sens de défilement de la fibre. Avantageusement, le niveau de ladite poudre dans ledit lit fluidisé est au moins situé à la mi-hauteur dudit rouleau de compression.

Il est bien évident que « l'effet de coin » provoqué par l'angle $\alpha_1$ favorise l'imprégnation sur une face mais l'épanouissement de ladite mèche obtenu grâce au rouleau de compression permet aussi d'avoir une pré-imprégnation sur l'autre face de ladite mèche. Autrement dit, ladite pré-imprégnation est favorisée sur une face de ladite mèche ou desdites mèches au niveau de l'angle $\alpha_1$ formé par ladite mèche ou lesdites mèches entre l'entrée dudit au moins un rouleau de compression $R_1$ et la tangente verticale au rouleau de compression $R_1$ mais l'épanouissement permet aussi d'imprégner l'autre face.

L'angle $\alpha_1$ est tel que défini ci-dessus.

Selon une deuxième variante, lorsque la pièce d'embarrage (E') est au moins un rouleau de compression, alors deux rouleaux de compression $R_1$ et $R_2$ sont dans ledit lit fluidisé et ladite pré-imprégnation est effectuée au niveau de l'angle $\alpha_1$ formé par ladite mèche ou lesdites mèches entre l'entrée dudit rouleau de compression $R_1$ et la tangente verticale audit rouleau de compression $R_1$ et/ou au niveau de l'angle $\alpha_2$ formé par ladite mèche ou lesdites mèches entre l'entrée dudit rouleau de compression $R_2$ et la tangente verticale audit rouleau de compression $R_2$, ledit rouleau de compression $R_1$ précédant ledit rouleau de compression $R_2$ et ladite mèche ou lesdites mèche pouvant passer au-dessus (figure 4 et 5) ou en dessous (figure 6 et 7) du rouleau de compression $R_2$.

Avantageusement, les deux rouleaux de compression sont de forme identique ou différente et choisie parmi une forme convexe, concave ou cylindrique.

Avantageusement, les deux rouleaux de compression sont identiques et cylindriques non cannelés et en particulier métalliques.

Le diamètre des deux rouleaux de compression peut aussi être identique ou différent et est tel que défini ci-dessus.

Avantageusement, le diamètre des deux rouleaux de compression est identique.

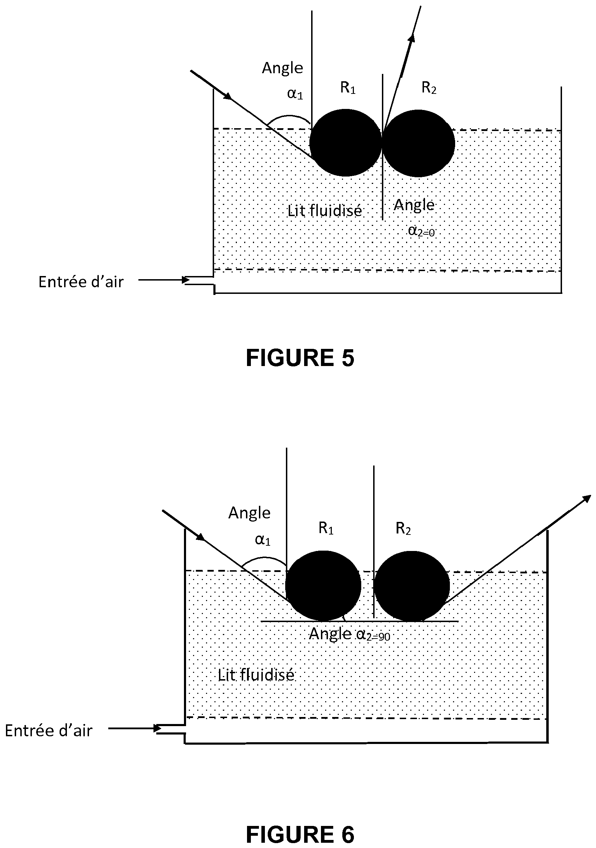

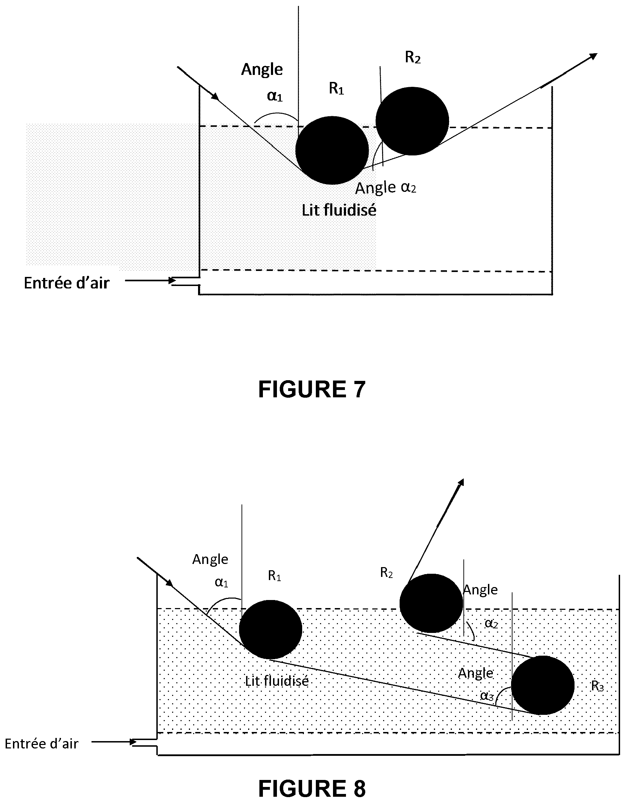

Les deux rouleaux de compression $R_1$ et $R_2$ peuvent être au même niveau l'un par rapport à l'autre et par rapport au fond de la cuve (figures 5 et 6) ou décalés l'un par rapport à l'autre et par rapport au fond de la cuve, la hauteur du rouleau de compression $R_1$ étant supérieure ou inférieure à celle du rouleau de compression $R_2$ par rapport au fond de la cuve (figures 4 et 7).

Avantageusement, lorsque les deux rouleaux sont à des hauteurs différentes et que la mèche passe au-dessus du rouleau $R_2$, alors $\alpha_2$ est compris de 0 à 90°.

Avantageusement, ladite pré-imprégnation s'effectue donc au niveau de l'angle $\alpha_1$ formé par ladite mèche ou lesdites mèches entre l'entrée dudit rouleau de compression $R_1$ et la tangente verticale audit rouleau de compression sur une face de ladite mèche et au niveau de l'angle $\alpha_2$ formé par ladite mèche ou lesdites mèches entre l'entrée dudit rouleau de compression $R_2$ et la tangente verticale audit rouleau de compression $R_2$ sur la face opposée de la dite mèche ce qui s'obtient en passant au-dessus du rouleau $R_2$.

Avantageusement, ladite mèche dans ce mode de réalisation est sujette à un épanouissement au niveau de chaque angle $\alpha_1$ et $\alpha_2$.

La figure 5 décrit un mode de réalisation, sans être limité à celui-ci, à deux rouleaux de compression $R_1$ et $R_2$, $R_1$ précédant $R_2$, avec une cuve (10) comprenant un lit fluidisé (12) dans lequel les deux rouleaux de compression cylindriques, au même niveau et côte à côte, sont présents et montrant le cas où ladite ou lesdites mèches ressortent entre lesdits rouleaux de compression $R_1$ et $R_2$.

Dans ce cas, l'angle $\alpha_2$ est égal à 0 et ladite ou lesdites mèches passent par-dessus le rouleau $R_2$.

Les flèches au niveau de la fibre indiquent le sens de défilement de la fibre.

De manière alternative, ladite mèche ou lesdites mèches défile(nt) en entrée entre lesdits rouleaux de compression $R_1$ et $R_2$ et ressort(ent) après avoir été en contact avec une partie ou la totalité de la surface dudit rouleau de compression $R_2$.

Avantageusement, ladite mèche ou lesdites mèches est(sont) en contact en entrée avec une partie ou la totalité de la surface dudit rouleau de compression $R_1$ et ressort(ent) à l'extérieur du rouleau de compression $R_2$ après avoir

été en contact avec une partie ou la totalité de la surface dudit rouleau de compression $R_2$, sous le rouleau $R_2$, l'angle $\alpha_2$ étant formé par ladite mèche ou lesdites mèches entre l'entrée dudit rouleau de compression $R_2$ et la tangente verticale audit rouleau de compression $R_2$. Dans ce cas, l'angle $\alpha_2$ = 90°.

Ladite pré-imprégnation s'effectue donc au niveau de l'angle $\alpha_1$ formé par ladite mèche ou lesdites mèches entre l'entrée dudit rouleau de compression $R_1$ et la tangente verticale audit rouleau de compression sur une face de ladite mèche et au niveau de l'angle $\alpha_2$ formé par ladite mèche ou lesdites mèches entre l'entrée dudit rouleau de compression $R_2$ et la tangente verticale audit rouleau de compression $R_2$ sur la même face de la dite mèche mais l'épanouissement permet aussi d'imprégner l'autre face.

Avantageusement, ladite mèche dans ce mode de réalisation est sujette à un épanouissement au niveau de chaque angle $\alpha_1$ et $\alpha_2$.

La figure 6 présente un exemple de mode de réalisation avec deux rouleaux de compression $R_1$ et $R_2$ au même niveau l'un par rapport à l'autre.

Selon un autre mode de réalisation de la deuxième variante, lorsque deux rouleaux de compression sont présents alors la distance entre les deux rouleaux de compression $R_1$ et $R_2$ est comprise de 0,15 mm à la longueur équivalente à la dimension maximale de la cuve, préférentiellement comprise de 10mm à 50mm et la différence de hauteur entre les deux rouleaux de compression $R_1$ et $R_2$ est comprise de 0 à la hauteur correspondant à la hauteur maximale de la cuve soustraite des diamètres des deux rouleaux de compression, préférentiellement comprise de 0,15mm à la hauteur correspondant à la hauteur maximale de la cuve soustraite des diamètres des deux rouleaux de compression, plus préférentiellement à une différence de hauteur comprise entre 10mm et 300mm, $R_2$ étant le rouleau de compression supérieur.

Dans toute la description, la différence de hauteur entre deux rouleaux et la distance entre deux rouleaux (qu'ils soient situés en amont de la cuve, dans la cuve ou au niveau du système de chauffage) est déterminée par rapport au centre de chaque rouleau.

Avantageusement, lorsque deux rouleaux de compression sont présents et au même niveau l'un par rapport à l'autre, le niveau de ladite poudre dans ledit lit fluidisé est au moins situé à la mi-hauteur desdits deux rouleaux de compression.

La figure 7 décrit un mode de réalisation, sans être limité à celui-ci, à deux rouleaux de compression $R_1$ et $R_2$, $R_1$ précédant $R_2$, avec une cuve (10) comprenant un lit fluidisé (12) dans lequel deux rouleaux de compression cylindriques à des niveaux différents sont présents et montrant l'angle $\alpha_1$ et $\alpha_2$.

Le diamètre des rouleaux de compression $R_1$ et $R_2$ est présenté comme identique sur les figures 4, 5, 6 et 7 mais le diamètre de chaque rouleau de compression cylindrique peut être différent, le diamètre du rouleau de compression $R_1$ pouvant être supérieur ou inférieur à celui du rouleau de compression $R_2$ dans la gamme telle que définie ci-dessus.

Avantageusement, le diamètre des deux rouleaux de compression est identique.

On ne sortirait pas du cadre de l'invention si le rouleau de compression $R_1$ était supérieur au rouleau de compression $R_2$.

Selon une troisième variante, lorsque deux rouleaux de compression sont présents et à des niveaux différents, alors au moins un troisième rouleau de compression $R_3$ est de plus présent et situé entre les rouleaux de compression $R_1$ et $R_2$ dans le sens de la hauteur (figure 8).

Avantageusement ladite mèche ou lesdites mèches est(sont) en contact en entrée avec une partie ou la totalité de la surface dudit rouleau de compression $R_1$ puis avec une partie ou la totalité de la surface dudit rouleau de compression $R_3$ et ressort(ent) après avoir été en contact avec une partie ou la totalité de la surface dudit rouleau de compression $R_2$.

Avantageusement, ladite pré-imprégnation est effectuée sur une face de ladite mèche ou desdites mèches au niveau de l'angle $\alpha_1$ formé par ladite mèche ou lesdites mèches entre l'entrée dudit au moins un rouleau de compression $R_1$ et la tangente verticale au rouleau de compression $R_1$ ainsi qu'au niveau de l'angle $\alpha_3$ formé par ladite mèche ou lesdites mèches et la tangente verticale au rouleau de compression $R_3$ et sur l'autre face qu'au niveau de l'angle $\alpha_2$ formé par ladite mèche ou lesdites mèches et la tangente verticale au rouleau de compression $R_2$.

Avantageusement, lorsque deux rouleaux de compression sont présents à des niveaux différents et qu'au moins un troisième rouleau de compression $R_3$ est de plus présent, alors l'angle $\alpha_2$ formé par ladite mèche ou lesdites mèches entre l'entrée dudit au moins un rouleau de compression $R_2$ et la tangente verticale audit rouleau de compression $R_2$, est compris de 180° à 45°, en particulier de 120° à 60°.

Avantageusement, l'angle $\alpha_3$ est compris de 0° à 180°, avantageusement de 45° à 135°.

La figure 8 décrit un mode de réalisation, sans être limité à celui-ci, avec une cuve (10) comprenant un lit fluidisé (12) à deux rouleaux de compression $R_1$ et $R_2$, $R_1$ précédant $R_2$, et un troisième rouleau de compression $R_3$ et montrant les angles $\alpha_1$, $\alpha_2$ et $\alpha_3$.

Le diamètre des rouleaux de compression $R_1$, $R_2$ et $R_3$ est présenté comme identique sur la figure 8 mais le diamètre de chaque rouleau de compression cylindrique peut être différent, ou deux rouleaux de compression peuvent avoir le même diamètre et le troisième un diamètre différent supérieur ou inférieur, dans la gamme telle que définie ci-dessus.

Avantageusement, le diamètre des trois rouleaux de compression est identique.

Avantageusement, dans cette troisième variante, un deuxième contrôle de l'épanouissement de ladite mèche ou desdites mèches est effectué au niveau du rouleau de compression $R_3$ et un troisième contrôle de l'épanouissement est effectué au niveau du rouleau de compression $R_3$.

Le temps de séjour dans cette troisième variante est tel que défini ci-dessus.

Avantageusement, dans cette troisième variante, le niveau de ladite poudre dans ledit lit fluidisé est au moins situé à la mi-hauteur dudit rouleau de compression $R_2$.

On ne sortirait pas du cadre de l'invention si dans cette troisième variante, ladite mèche ou lesdites mèches est(sont) en contact en entrée avec une partie ou la totalité de la surface dudit rouleau de compression $R_1$ puis avec une partie ou la totalité de la surface dudit rouleau de compression $R_2$ et ressort(ent) après avoir été en contact avec une partie ou la totalité de la surface dudit rouleau de compression $R_3$.

Selon un mode de réalisation avantageux, la présente invention concerne un procédé tel que ci-dessus défini caractérisé en ce que une seule matrice polymère thermoplastique est utilisée et la poudre de polymère thermoplastique est fluidisable.

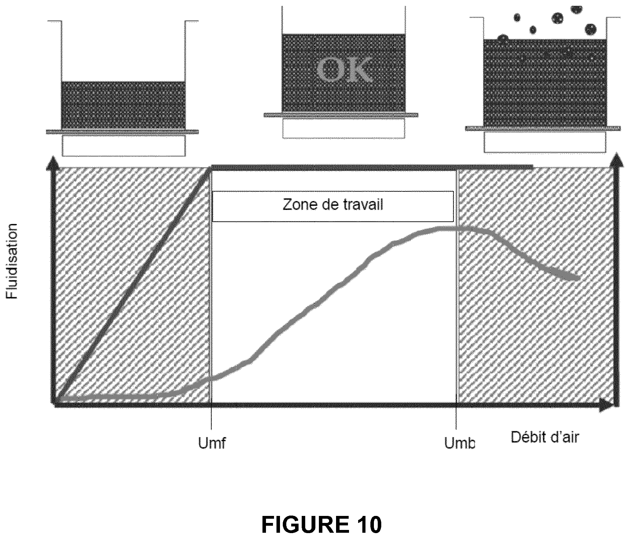

Le terme « fluidisable » signifie que le débit d'air appliqué au lit fluidisé est compris entre le débit minimum de fluidisation (Umf) et le débit minimum de bullage (Umf) tel que représenté figure 10.

En dessous du débit minimum de fluidisation, il n'y pas de fluidisation, les particules de poudre de polymère tombent dans le lit et ne sont plus en suspension et le procédé selon l'invention ne peut fonctionner.

Au-dessus du débit minimum de bullage, les particules de poudre s'envolent et la composition du lit fluidisé ne peut plus être maintenue constante.

Avantageusement, le diamètre en volume D90 des particules de poudre de polymère thermoplastique est compris 30 à 500 $\mu$m, avantageusement de 80 à 300 $\mu$m.

Avantageusement, le diamètre en volume D10 des particules de poudre de polymère thermoplastique est compris de 5 à 200 $\mu$m, avantageusement de 15 à 100 $\mu$m.

Avantageusement, le diamètre en volume des particules de poudre de polymère thermoplastique est compris dans le ratio D90/D10, soit compris de 1,5 à 50, avantageusement de 2 à 10.

Avantageusement, le diamètre moyen D50 en volume des particules de poudre de polymère thermoplastique est compris de 10 à 300 $\mu$m, notamment de 30 à 200 $\mu$m, plus particulièrement de 45 à 200$\mu$m.

Les diamètres en volume des particules de poudre de polymère thermoplastique (D10, D50 et D90) sont définis selon la norme ISO 9276 :2014.

Le « D50 » correspond au diamètre moyen en volume, c'est à dire la valeur de la taille de particule qui divise la population de particules examinée exactement en deux.

Le « D90 » correspond à la valeur à 90% de la courbe cumulée de la distribution granulométrique en volume.

Le « D10 » correspond à la correspond à la taille de 10% du volume des particules.

Selon un autre mode de réalisation du procédé selon l'invention, un cantre est présent avant la cuve comprenant un lit fluidisé pour le contrôle de la tension de ladite mèche ou desdites mèches à l'entrée de la cuve comprenant un lit fluidisé.

Optionnellement, dans le procédé selon l'invention, un ou plusieurs embarrages sont présents après la cuve comprenant le lit fluidisé.

Optionnellement, une tension différentielle est appliquée entre l'entrée et la sortie de la cuve utilisée pour l'étape de de pré-imprégnation au moyen d'un frein en sortie de ladite cuve.

**Etape de pulvérisation par pistolet** :

L'étape de pré-imprégnation du matériau fibreux est réalisée par passage d'une ou plusieurs mèches dans un dispositif de pré-imprégnation en continu par projection, comprenant une cuve (30), comprenant une ou des buses(s) ou un ou des pistolet(s) projetant la poudre de polymère sur le matériau fibreux en entrée de rouleau.

La poudre de polymère(s) ou polymère est projetée dans la cuve au moyen de buse(s) ou de pistolet(s) au niveau de la pièce d'embarrage (E') notamment du rouleau de compression (en entrée) sur ledit matériau fibreux. La ou les mèches sont mises en circulation dans cette cuve.

(E') ou le rouleau de compression sont tels que définis pour le lit fluidisé.

La cuve peut avoir toute forme, notamment cylindrique ou parallélépipédique, en particulier un parallélépipède rectangle ou un cube, avantageusement un parallélépipède rectangle.

La cuve peut être une cuve ouverte ou fermée. Avantageusement, elle est ouverte.

Dans le cas où la cuve est fermée, elle est alors équipée d'un système d'étanchéité pour que la poudre de polymère ne puisse pas sortir de ladite cuve.

Cette étape de pré-imprégnation est donc effectuée par voie sèche, c'est à dire que la matrice polymère thermoplastique est sous forme de poudre, et projetée dans l'air, mais ne peut pas être en dispersion dans un solvant ou dans l'eau.

Chaque mèche à pré-imprégner est déroulée d'un dispositif à dévidoirs sous la traction engendrée par des cylindres (non représentés). De préférence, le dispositif comprend une pluralité de dévidoirs, chaque dévidoir permettant de dérouler une mèche à pré-imprégner.

Ainsi, il est possible de pré-imprégner plusieurs mèches de fibres simultanément. Chaque dévidoir est pourvu d'un frein (non représenté) de manière à appliquer une tension sur chaque mèche de fibres. Dans ce cas, un module d'alignement permet de disposer les mèches de fibres parallèlement les unes par rapport aux autres. De cette manière les mèches de fibres ne peuvent pas être en contact les unes avec les autres, ce qui permet d'éviter une dégradation mécanique des fibres par frottement entre elles.

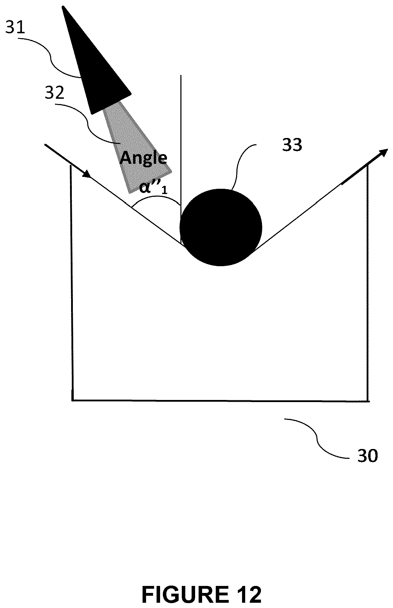

La mèche de fibres ou les mèches de fibres parallèles passent alors dans une cuve (30), munie d'une pièce d'embarrage qui est un rouleau de compression (33) dans le cas de la figure 12. La mèche de fibres ou les mèches de fibres parallèles ressort(ent) ensuite de la cuve après pré-imprégnation après contrôle du débit de projection de ladite poudre par ladite buse (ou les dites buses) ou ledit pistolet (ou lesdits) sur ledit matériau fibreux.

Par pièce d'embarrage, il faut entendre tout système sur lequel la mèche a la possibilité de défiler dans la cuve. La pièce d'embarrage peut avoir n'importe quelle forme à partir du moment où la mèche peut défiler dessus.

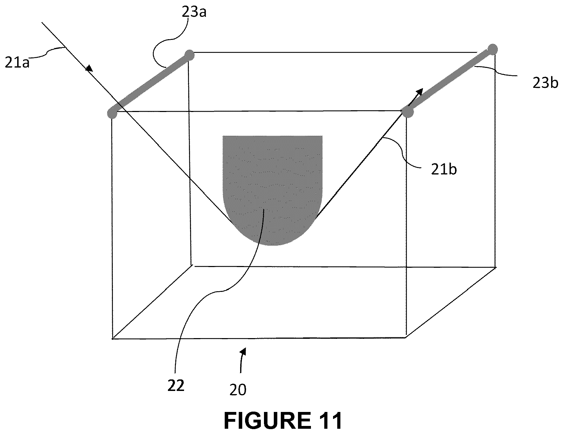

Un exemple de pièce d'embarrage, sans restreindre l'invention à celui-ci, est détaillé dans la figure 11.

Cette pré-imprégnation est réalisée afin de permettre à la poudre de polymère de pénétrer dans la mèche de fibre et d'adhérer aux fibres suffisamment pour supporter le transport de la mèche poudrée hors de la cuve.

Le bain est muni d'embarrages fixes ou rotatifs sur lesquels la mèche défile provoquant ainsi un épanouissement de ladite mèche permettant une pré-imprégnation de ladite mèche.

Le procédé de l'invention comme indiqué ci-dessus est effectué par voie sèche.

Le procédé de l'invention n'exclut pas la présence de charges électrostatiques qui pourraient apparaitre par frottement du matériau fibreux sur les éléments de l'unité de mise en oeuvre avant ou au niveau de la cuve mais qui sont en tout état de cause des charges involontaires. Avantageusement, la cuve comprend au moins une pièce d'embarrage, ladite mèche ou lesdites mèches étant en contact avec une partie ou la totalité de la surface de ladite au moins une pièce d'embarrage.

Si le matériau fibreux, tel que la fibre de verre, présente un ensimage, une étape optionnelle de dé-ensimage peut être effectuée avant le passage du matériau fibreux dans la cuve. Le terme « ensimage » désigne les traitements de surface appliqués aux fibres de renfort en sortie de filière (ensimage textile) et sur les tissus (ensimage plastique).

L'ensimage "textile" appliqué sur les fibres, en sortie de filière consiste à déposer un agent de liaison assurant la cohésion des fibres entre elles, diminuant l'abrasion et facilitant les manipulations ultérieures (tissage, drapage, tricotage) et évitant la formation de charges électrostatiques.

L'ensimage "plastique" ou "finish" appliqué sur les tissus consiste à déposer un agent de pontage dont les rôles sont d'assurer une liaison physico-chimique entre les fibres et la résine et de protéger la fibre de son environnement.

Avantageusement, le débit de projection de la poudre par la (ou les) buse(s) ou le (ou les) pistolet(s) est compris de 10g/min à 400g/min, en particulier de 20 à 150 g/min.

Ce débit s'entend pour chaque pistolet ou buse et peut être identique ou différent pour chaque pistolet ou buse.

Le débit de projection de la poudre sur matériau fibreux est essentiel à la pré-imprégnation dudit matériau fibreux.

En deçà de 10g/min, le flux d'air n'est pas suffisant pour véhiculer la poudre.

Au-delà de 400g/min, le régime est turbulent.

Avantageusement, ladite étape de pré-imprégnation est effectuée avec épanouissement simultané de ladite mèche ou desdites mèches entre l'entrée et la sortie de ladite cuve.

L'expression « entrée de ladite cuve » correspond à la tangente verticale du bord de la cuve qui comprend le ou les rouleaux avec buse(s) ou pistolet(s).

L'expression « sortie de ladite cuve » correspond à la tangente verticale de l'autre bord de la cuve qui comprend le ou les rouleaux avec buse(s) ou pistolet(s).

En fonction de la géométrie de la cuve, la distance entre l'entrée et la sortie de celle-ci correspond donc au diamètre dans le cas du cylindre, au côté dans le cas d'un cube ou à la largeur ou la longueur dans le cas d'un parallélépipède rectangle. L'épanouissement consiste à singulariser au maximum chaque fibre constituant ladite mèche des autres fibres qui l'entourent dans son plus proche espace. Il correspond à l'étalement transverse de la mèche.

En d'autres termes, l'étalement transverse ou la largeur de la mèche augmente entre l'entrée de la cuve et la sortie de la cuve et permet ainsi une pré-imprégnation améliorée du matériau fibreux.

La cuve peut être ouverte ou fermée, en particulier elle est ouverte.

Avantageusement, la cuve comprend au moins une pièce d'embarrage, ladite mèche ou lesdites mèches étant en contact avec une partie ou la totalité de la surface de ladite au moins une pièce d'embarrage.

La figure 11 détaille une cuve (20) comprenant une pièce d'embarrage, réglable en hauteur (22).

La mèche (21a) correspond à la mèche avant pré-imprégnation qui est en contact avec une partie ou la totalité de la surface de ladite au moins une pièce d'embarrage et défile donc partiellement ou totalement à la surface de la pièce d'embarrage (22), ledit système (22) étant immergé dans la cuve où la pré-imprégnation s'effectue. Ladite mèche ressort ensuite de la cuve (21b) après contrôle du débit de projection de la poudre en entrée de rouleau.

La dite mèche (21a) peut être en contact ou non avec le bord de la cuve (23a) qui peut être un rouleau rotatif ou fixe ou un bord parallélépipédique.

Avantageusement, la dite mèche (21a) est en contact avec le bord d'entrée de la cuve (23a). Avantageusement, le bord de sortie la cuve (23b) est un rouleau, notamment cylindrique et rotatif.

La dite mèche (21b) peut être en contact ou non avec le bord de sortie de la cuve (23b) qui peut être un rouleau, notamment cylindrique et rotatif ou fixe, ou un bord parallélépipédique. Avantageusement, la dite mèche (21b) est en contact avec le bord de sortie de la cuve (23b). Avantageusement, le bord de sortie de la cuve (23b) est un rouleau, notamment cylindrique et rotatif.

Avantageusement, la dite mèche (21a) est en contact avec le bord d'entrée de la cuve (23a) et le bord de sortie de la cuve (23b) est un rouleau, notamment cylindrique et rotatif et la dite mèche (21b) est en contact avec le bord d'entrée de la cuve (23b), et le bord de sortie de la cuve (23b) est un rouleau, notamment cylindrique et rotatif.

Avantageusement, la dite mèche (21a) est en contact avec le bord d'entrée de la cuve (23a) et un rouleau, notamment cylindrique et rotatif, et la dite mèche (21b) ne touche pas le bord de sortie de la cuve (23b).

Avantageusement, ladite pièce d'embarrage est perpendiculaire à la direction de ladite mèche ou desdites mèches.

Avantageusement, ledit épanouissement de ladite mèche ou desdites mèches est effectué au moins au niveau de ladite au moins une pièce d'embarrage.

L'épanouissement de la mèche s'effectue donc principalement au niveau de la pièce d'embarrage mais peut également s'effectuer au niveau du ou des bords de la cuve s'il y a contact entre la mèche et ledit bord.

Dans un autre mode de réalisation, ladite au moins une pièce d'embarrage est un rouleau de compression de forme convexe, concave ou cylindrique.

La forme convexe est favorable à l'épanouissement alors que la forme concave est défavorable à l'épanouissement bien qu'il s'effectue néanmoins.

L'expression « rouleau de compression » signifie que la mèche qui défile s'appuie partiellement ou totalement sur la surface dudit rouleau de compression, ce qui induit l'épanouissement de la dite mèche.

Avantageusement, ledit au moins un rouleau de compression est de forme cylindrique et le pourcentage d'épanouissement de ladite mèche ou desdites mèches entre l'entrée et la sortie de ladite cuve est compris de 100% à 1000%, préférentiellement de 100% à 800% préférentiellement de 100% à 800%, préférentiellement de 100% à 200%. Le pourcentage d'épanouissement est égal au rapport de la largeur finale de la mèche sur la largeur initiale de la mèche multiplié par 100.

L'épanouissement est fonction du matériau fibreux utilisé. Par exemple, l'épanouissement d'un matériau en fibre de carbone est beaucoup plus important que celui d'une fibre de lin. L'épanouissement est aussi fonction du nombre de fibres dans la mèche, de leur diamètre moyen et de leur cohésion de par l'ensimage.

Le diamètre dudit au moins un rouleau de compression est compris de 3 mm à 500 mm, préférentiellement de 10 mm à 100 mm, en particulier de 20 mm à 60 mm.

Au-dessous de 3 mm, la déformation de la fibre induite par le rouleau de compression est trop importante.

Avantageusement, le rouleau de compression est cylindrique et non cannelé et en particulier est métallique.

Lorsque la pièce d'embarrage est au moins un rouleau de compression, selon une première variante, un seul rouleau de compression est présent dans la cuve et ladite pré-imprégnation est effectuée au niveau de l'angle $\alpha''_1$ formé par ladite mèche ou lesdites mèches entre l'entrée dudit rouleau de compression et la tangente verticale audit rouleau de compression. L'angle $\alpha''_1$ formé par ladite mèche ou lesdites mèches entre l'entrée dudit rouleau de compression et la tangente verticale audit rouleau de compression permet la formation d'une zone dans laquelle la poudre va se concentrer conduisant ainsi à un « effet de coin » qui avec l'épanouissement simultané de la mèche par ledit rouleau de compression permet une pré-imprégnation sur une largeur plus importante de mèche et donc une pré-imprégnation améliorée comparée aux techniques de l'art antérieur améliorée.

Avantageusement, l'angle $\alpha''_1$ est compris de 0 à 89°, préférentiellement 5° à 85°, préférentiellement de 5° à 45°, préférentiellement de 5° à 30°.

Néanmoins, un angle $\alpha''_1$ compris de 0 à 5° est susceptible d'engendrer des risques de sollicitation mécanique, ce qui conduira à la casse des fibres et un angle $\alpha''_1$ compris de 85° à 89° ne crée pas suffisamment d'effort mécanique pour créer « l'effet de coin ».

Une valeur de l'angle $\alpha''_1$ égale à 0° correspond donc à une fibre verticale. Il est bien évident que la hauteur du rouleau de compression cylindrique est réglable permettant ainsi de pouvoir positionner la fibre verticalement.

On ne sortirait pas du cadre de l'invention si la paroi de la cuve était percée de manière à pouvoir permettre la sortie de la mèche.

Avantageusement, le bord d'entrée de la cuve (23a) est équipé d'un rouleau, notamment cylindrique et rotatif sur lequel défile ladite mèche ou les dites mèches conduisant ainsi à un épanouissement préalable à la pré-imprégnation.

Dans un mode de réalisation, l'épanouissement est initié au niveau du bord d'entrée de la cuve (23a) et se poursuit au niveau du ou desdits embarrages (E') ci-dessus définis.

Dans un autre mode de réalisation, un ou plusieurs embarrages (E") sont présents en amont de la cuve comprenant le lit fluidisé au niveau duquel ou desquels l'épanouissement est initié. Les embarrages (E") sont tels que définis pour (E').

Avantageusement, l'épanouissement est initié au niveau du ou desdits embarrages (E") ci-dessus définis et se poursuit éventuellement au niveau du bord d'entrée de la cuve puis au niveau du ou desdits embarrages (E') ci-dessus définis.

L'épanouissement est alors maximum après passage au niveau du ou des rouleaux de compression (E').

Avantageusement, le pourcentage d'épanouissement de ladite mèche ou desdites mèches entre l'entrée des embarrages (E") et la sortie de la cuve est compris de 100% à 1000%, préférentiellement de 100% à 800% préférentiellement de 100% à 500%, préférentiellement de 100% à 200%. Le pourcentage d'épanouissement est égal au rapport de la largeur finale de la mèche sur la largeur initiale de la mèche multiplié par 100.

Avantageusement, le pourcentage d'épanouissement de ladite mèche ou desdites mèches entre l'entrée et la sortie des embarrages (E") est compris de 100% à 1000%, préférentiellement de 100% à 800% préférentiellement de 200% à 800%, préférentiellement de 400% à 800%.

La figure 12 décrit un mode de réalisation, sans être limité à celui-ci, à un seul rouleau de compression, avec une cuve (30) comprenant un pistolet de projection (31) de poudre (32) et dans laquelle un seul rouleau de compression cylindrique (33) est présent et montrant l'angle $\alpha''_1$.

Les flèches au niveau de la fibre indiquent le sens de défilement de la fibre.

Avantageusement, le niveau de ladite poudre dans ladite cuve est au moins situé à la mi-hauteur dudit rouleau de compression.

Il est bien évident que « l'effet de coin » provoqué par l'angle $\alpha''_1$ favorise la pré-imprégnation sur une face mais l'épanouissement de ladite mèche obtenu grâce au rouleau de compression permet aussi d'avoir une pré-imprégnation sur l'autre face de ladite mèche. Autrement dit, ladite pré-imprégnation est favorisée sur une face de ladite mèche ou desdites mèches au niveau de l'angle $\alpha''_1$ formé par ladite mèche ou lesdites mèches entre l'entrée dudit au moins un rouleau de compression R"$_1$ (33) et la tangente verticale au rouleau de compression R"$_1$ mais l'épanouissement permet aussi de pré-imprégner l'autre face.

L'angle $\alpha''_1$ est tel que défini ci-dessus.

L'épanouissement de ladite mèche permet une pré-imprégnation de ladite mèche.

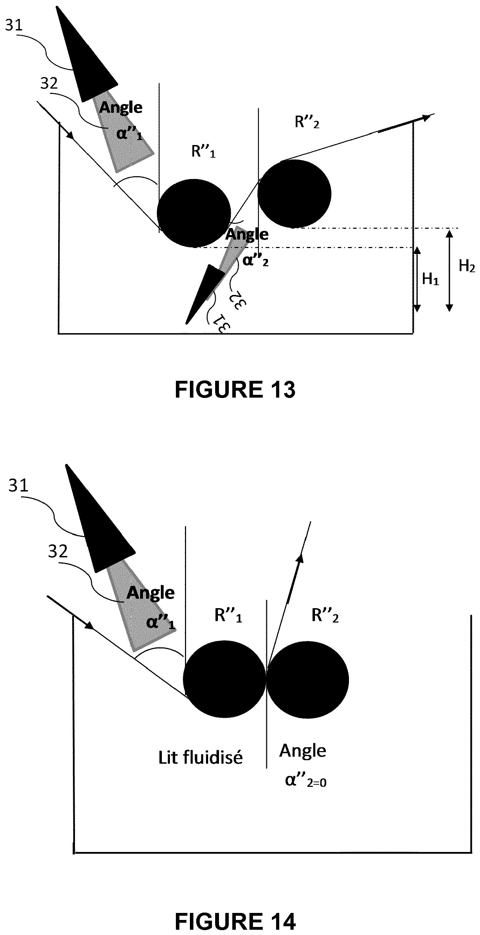

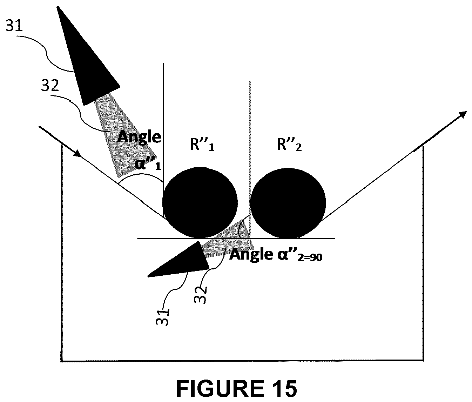

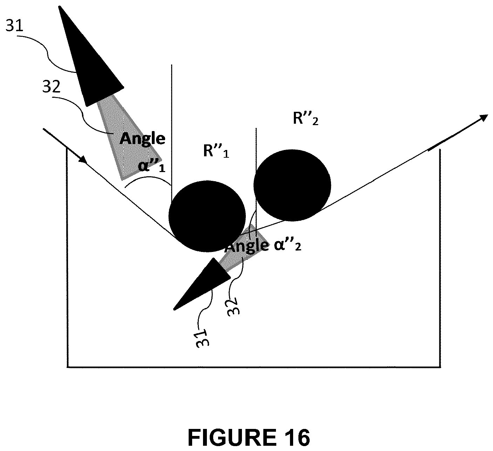

Selon une deuxième variante, lorsque la pièce d'embarrage est au moins un rouleau de compression, alors deux rouleaux de compression R"$_1$ et R"$_2$ sont dans ladite cuve et ladite pré-imprégnation est effectuée au niveau de l'angle $\alpha_1$ formé par ladite mèche ou lesdites mèches entre l'entrée dudit rouleau de compression R"$_1$ et la tangente verticale audit rouleau de compression R"$_1$ et/ou au niveau de l'angle $\alpha''_2$ formé par ladite mèche ou lesdites mèches entre l'entrée dudit rouleau de compression R"$_2$ et la tangente verticale audit rouleau de compression R"$_2$, ledit rouleau de compression R"$_1$ précédant ledit rouleau de compression R"$_2$ et ladite mèche ou lesdites mèche pouvant passer au-dessus (figure 13 et 14) ou en dessous (figure 15 et 16) du rouleau R"$_2$.

Avantageusement, les deux rouleaux de compression sont de forme identique ou différente et choisie parmi une forme convexe, concave ou cylindrique.

Avantageusement, les deux rouleaux de compression sont identiques et cylindriques non cannelés et en particulier métalliques.

Le diamètre des deux rouleaux de compression peut aussi être identique ou différent et est tel que défini ci-dessus.

Avantageusement, le diamètre des deux rouleaux de compression est identique.

Les deux rouleaux de compression R"$_1$ et R"$_2$ peuvent être au même niveau l'un par rapport à l'autre et par rapport au fond de la cuve (figures 14 et 15) ou décalés l'un par rapport à l'autre et par rapport au fond de la cuve, la hauteur du rouleau de compression R"$_1$ étant supérieure ou inférieure à celle du rouleau de compression R"$_2$ par rapport au fond de la cuve (figures 13 et 16).

Avantageusement, lorsque les deux rouleaux sont à des hauteurs différentes et que la mèche passe au-dessus du rouleau R"$_2$, alors $\alpha''_2$ est compris de 0 à 90°.

Avantageusement, ladite pré-imprégnation s'effectue donc au niveau de l'angle $\alpha_1$ formé par ladite mèche ou lesdites mèches entre l'entrée dudit rouleau de compression R"$_1$ et la tangente verticale audit rouleau de compression sur une face de ladite mèche et au niveau de l'angle $\alpha''_2$ formé par ladite mèche ou lesdites mèches entre l'entrée dudit rouleau de compression R"$_2$ et la tangente verticale audit rouleau de compression R"$_2$ sur la face opposée de la dite mèche ce qui s'obtient en passant au-dessus du rouleau R"$_2$.

Avantageusement, ladite mèche dans ce mode de réalisation est sujette à un épanouissement au niveau de

chaque angle $\alpha''_1$ et $\alpha''_2$.

La figure 14 décrit un mode de réalisation, sans être limité à celui-ci, à deux rouleaux de compression R''$_1$ et R''$_2$, R''$_1$ précédant R''$_2$, avec une cuve (30) comprenant un pistolet de projection (31) de poudre (32) dans lequel les deux rouleaux de compression cylindriques, au même niveau et côte à côte, sont présents et montrant le cas où ladite ou lesdites mèches ressortent entre lesdits rouleaux de compression R''$_1$ et R''$_2$.

Dans ce cas, l'angle $\alpha''_2$ est égal à 0 et ladite ou lesdites mèches passent par-dessus le rouleau R''$_2$.

Les flèches au niveau de la fibre indiquent le sens de défilement de la fibre.

De manière alternative, ladite mèche ou lesdites mèches défile(nt) en entrée entre lesdits rouleaux de compression R''$_1$ et R''$_2$ et ressort(ent) après avoir été en contact avec une partie ou la totalité de la surface dudit rouleau de compression R''$_2$.

Avantageusement, ladite mèche ou lesdites mèches est(sont) en contact en entrée avec une partie ou la totalité de la surface dudit rouleau de compression R''$_1$ et ressort(ent) à l'extérieur du rouleau de compression R''$_2$ après avoir été en contact avec une partie ou la totalité de la surface dudit rouleau de compression R''$_2$, sous le rouleau R''$_2$, l'angle $\alpha''_2$ étant formé par ladite mèche ou lesdites mèches entre l'entrée dudit rouleau de compression R''$_2$ et la tangente verticale audit rouleau de compression R''$_2$. Dans ce cas, l'angle $\alpha''_2$=90°.

Ladite pré-imprégnation s'effectue donc au niveau de l'angle $\alpha_1$ formé par ladite mèche ou lesdites mèches entre l'entrée dudit rouleau de compression R''$_1$ et la tangente verticale audit rouleau de compression sur une face de ladite mèche et au niveau de l'angle $\alpha''_2$ formé par ladite mèche ou lesdites mèches entre l'entrée dudit rouleau de compression R''$_2$ et la tangente verticale audit rouleau de compression R''$_2$ sur la même face de la dite mèche mais l'épanouissement permet aussi de pré-imprégner l'autre face.

Avantageusement, ladite mèche dans ce mode de réalisation est sujette à un épanouissement au niveau de chaque angle $\alpha''_1$ et $\alpha''_2$.

La figure 15 présente un exemple de mode de réalisation avec deux rouleaux de compression R''$_1$ et R''$_2$ au même niveau l'un par rapport à l'autre.

Selon un autre mode de réalisation de la deuxième variante, lorsque deux rouleaux de compression sont présents alors la distance entre les deux rouleaux de compression R''$_1$ et R''$_2$ est comprise de 0,15 mm à la longueur équivalente à la dimension maximale de la cuve, préférentiellement comprise de 10mm à 50mm et la différence de hauteur entre les deux rouleaux de compression R''$_1$ et R''$_2$ est comprise de 0 à la hauteur correspondant à la hauteur maximale de la cuve soustraite des diamètres des deux rouleaux de compression, préférentiellement comprise de 0,15mm à la hauteur correspondant à la hauteur maximale de la cuve soustraite des diamètres des deux rouleaux de compression, plus préférentiellement à une différence de hauteur comprise entre 10mm et 300mm, R''$_2$ étant le rouleau de compression supérieur.

La figure 16 décrit un mode de réalisation, sans être limité à celui-ci, à deux rouleaux de compression R''$_1$ et R''$_2$, R''$_1$ précédant R''$_2$, avec une cuve (30) comprenant chacun un pistolet de projection (31) de poudre (32) et dans laquelle deux rouleaux de compression cylindriques à des niveaux différents sont présents et montrant l'angle $\alpha''_1$ et $\alpha''_2$.

Le débit de projection de ladite poudre par chaque pistolet sur ledit matériau fibreux est identique ou différent, en particulier identique.

Le diamètre des rouleaux de compression R''$_1$ et R''$_2$ est présenté comme identique sur les figures 13, 14, 15 et 16 mais le diamètre de chaque rouleau de compression cylindrique peut être différent, le diamètre du rouleau de compression R''$_1$ pouvant être supérieur ou inférieur à celui du rouleau de compression R''$_2$ dans la gamme telle que définie ci-dessus.

Avantageusement, le diamètre des deux rouleaux de compression est identique.

On ne sortirait pas du cadre de l'invention si le rouleau de compression R''$_1$ était supérieur au rouleau de compression R''$_2$.

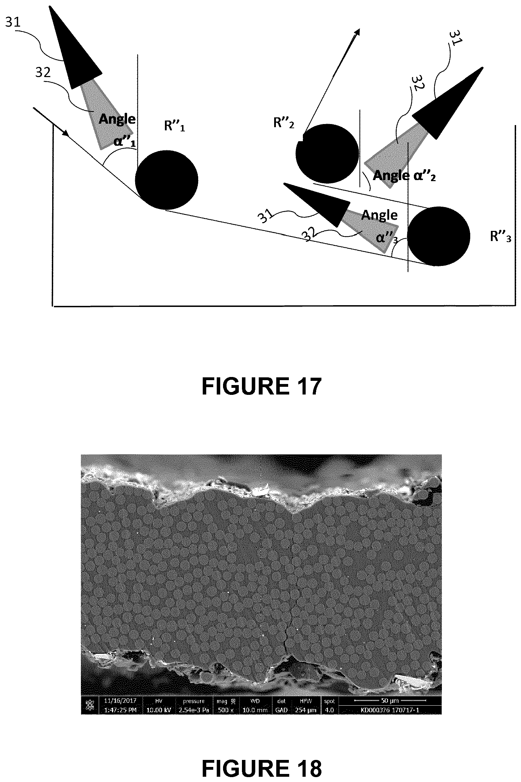

Selon une troisième variante, lorsque deux rouleaux de compression sont présents et à des niveaux différents, alors au moins un troisième rouleau de compression R''$_3$ est de plus présent et situé entre les rouleaux de compression R''$_1$ et R''$_2$ dans le sens de la hauteur (figure 17). Chaque rouleau de compression comprend un pistolet de projection (31) de poudre (32) et le débit de projection de ladite poudre par chaque pistolet sur ledit matériau fibreux en entrée de rouleau est identique ou différent, en particulier identique.

Avantageusement ladite mèche ou lesdites mèches est(sont) en contact en entrée avec une partie ou la totalité de la surface dudit rouleau de compression R''$_1$ puis avec une partie ou la totalité de la surface dudit rouleau de compression R''$_3$ et ressort(ent) après avoir été en contact avec une partie ou la totalité de la surface dudit rouleau de compression R''$_2$.

Avantageusement, ladite pré-imprégnation est effectuée sur une face de ladite mèche ou desdites mèches au niveau de l'angle $\alpha_1$ formé par ladite mèche ou lesdites mèches entre l'entrée dudit au moins un rouleau de compression R''$_1$ et la tangente verticale au rouleau de compression R''$_1$ ainsi qu'au niveau de l'angle $\alpha''_3$ formé par ladite mèche ou lesdites mèches et la tangente verticale au rouleau de compression R''$_3$ et sur l'autre face qu'au niveau de l'angle $\alpha_2$ formé par ladite mèche ou lesdites mèches et la tangente verticale au rouleau de compression R''$_2$.

Avantageusement, lorsque deux rouleaux de compression sont présents à des niveaux différents et qu'au moins un troisième rouleau de compression R"$_3$ est de plus présent, alors l'angle $\alpha$"$_2$ formé par ladite mèche ou lesdites mèches entre l'entrée dudit au moins un rouleau de compression R"$_2$ et la tangente verticale audit rouleau de compression R"$_2$, est compris de 180° à 45°, en particulier de 120° à 60.

Avantageusement, l'angle $\alpha$"$_3$ est compris de 0° à 180°, avantageusement de 45° à 135°.

La figure 17 décrit un mode de réalisation, sans être limité à celui-ci, avec une cuve (30) comprenant deux rouleaux de compression R"$_1$ et R"$_2$, R"$_1$ précédant R"$_2$, et un troisième rouleau de compression R"$_3$ et montrant les angles $\alpha$"$_1$, $\alpha$"$_2$ et $\alpha$"$_3$.

Le diamètre des rouleaux de compression R"$_1$, R"$_2$ et R"$_3$ est présenté comme identique sur la figure 17 mais le diamètre de chaque rouleau de compression cylindrique peut être différent, ou deux rouleaux de compression peuvent avoir le même diamètre et le troisième un diamètre différent supérieur ou inférieur, dans la gamme telle que définie ci-dessus.

Avantageusement, le diamètre des trois rouleaux de compression est identique.

Avantageusement, dans cette troisième variante, un deuxième contrôle de l'épanouissement de ladite mèche ou desdites mèches est effectué au niveau du rouleau de compression R"$_3$ et un troisième contrôle de l'épanouissement est effectué au niveau du rouleau de compression R"$_3$.

Le débit de projection dans cette troisième variante est tel que défini ci-dessus.

On ne sortirait pas du cadre de l'invention si dans cette troisième variante, ladite mèche ou lesdites mèches est(sont) en contact en entrée avec une partie ou la totalité de la surface dudit rouleau de compression R"$_1$ puis avec une partie ou la totalité de la surface dudit rouleau de compression R"$_2$ et ressort(ent) après avoir été en contact avec une partie ou la totalité de la surface dudit rouleau de compression R"$_3$.

Avantageusement, dans une autre variante, six à dix rouleaux sont présents et au même niveau.

Avantageusement, le débit de projection dans la cuve est compris de 10g/min à 400g/min, en particulier de 20 à 150 g/min.

Avantageusement, le diamètre en volume D90 des particules de poudre de polymère thermoplastique est compris 30 à 500 $\mu$m, avantageusement de 80 à 300 $\mu$m.

Avantageusement, le diamètre en volume D10 des particules de poudre de polymère thermoplastique est compris de 5 à 200 $\mu$m, avantageusement de 15 à 100 $\mu$m.

Avantageusement, le diamètre en volume des particules de poudre de polymère thermoplastique est compris dans le ratio D90/D10, soit compris de 1,5 à 50, avantageusement de 2 à 10.

Avantageusement, le diamètre moyen D50 en volume des particules de poudre de polymère thermoplastique est compris de 10 à 300 $\mu$m, notamment de 30 à 200 $\mu$m, plus particulièrement de 45 à 200$\mu$m.

Les diamètres en volume des particules (D10, D50 et D90) sont définis selon la norme ISO 9276 :2014.

Le « D50 » correspond au diamètre moyen en volume, c'est à dire la valeur de la taille de particule qui divise la population de particules examinée exactement en deux.

Le « D90 » correspond à la valeur à 90% de la courbe cumulée de la distribution granulométrique en volume.

Le « D10 » correspond à la correspond à la taille de 10% du volume des particules.

Selon un autre mode de réalisation du procédé selon l'invention, un cantre est présent avant la cuve pour le contrôle de la tension de ladite mèche ou desdites mèches à l'entrée de la cuve.

Optionnellement, dans le procédé selon l'invention, un ou plusieurs embarrages sont présents après la cuve.

Optionnellement, une tension différentielle est appliquée entre l'entrée et la sortie de la cuve utilisée pour l'étape de de pré-imprégnation au moyen d'un frein en sortie de ladite cuve.

**Etape de chauffage:**

Une première étape de chauffage peut être immédiatement consécutive à l'étape de pré-imprégnation ou alors d'autres étapes peuvent intervenir entre l'étape de pré-imprégnation et l'étape de chauffage et ce quelle que soit le système choisi pour effectuer l'étape de pré-imprégnation, et notamment avec un système choisi parmi un lit fluidisé, une pulvérisation par pistolet et la voie fondue, notamment à grande vitesse, en particulier un lit fluidisé.

Néanmoins, la première étape de chauffage mise en oeuvre par un système de chauffage muni d'au moins une pièce d'embarrage (E) ne correspond pas une calandre chauffante, et d'au moins un système de chauffage est toujours effectuée avant l'étape de calandrage qui est nécessaire pour lisser et mettre en forme le ruban.

Avantageusement, ladite première étape de chauffage est immédiatement consécutive à l'étape de pré-imprégnation. L'expression « immédiatement consécutive » signifie qu'il n'y a pas d'étape intermédiaire entre l'étape de pré-imprégnation et ladite étape de chauffage.

Avantageusement, une seule étape de chauffage est effectuée, immédiatement consécutive à l'étape de pré-imprégnation.

Avantageusement, ledit au moins un système de chauffage est choisi parmi un four thermique, une lampe infrarouge, une lampe UV et un chauffage par convection, en particulier parmi une lampe infrarouge, une lampe UV et un chauffage par convection.

Le matériau fibreux étant en contact avec le ou les embarrage(s) dans le système de chauffage, et l'embarrage étant conducteur, le système de chauffage s'effectue donc également par conduction.

Avantageusement, ledit au moins un système de chauffage est choisi parmi une lampe infrarouge. Le ou les embarrage(s) dans le système de chauffage est(sont) thermostaté(s) à une température comprise, pour un polymère thermoplastique semi-cristallin, de Tc-30°C à Tf+50°C, de préférence comprise de Tc à Tf et pour un polymère amorphe, de Tg+50°C à Tg+250°C, de préférence de Tg +100°C à Tg+200°C

Il est bien évident que la température de ladite pièce d'embarrage permet de maintenir la fusion du polymère.

Avantageusement, ladite au moins une pièce d'embarrage (E) est un rouleau de compression $R'_i$ de forme convexe, concave ou cylindrique.

Il faut noter que les rouleaux de compression correspondant aux pièces d'embarrage (E) et (E') peuvent être identiques ou différentes que ce soit au niveau du matériau ou de la forme et ses caractéristiques (diamètre, longueur, largeur, hauteur ... en fonction de la forme).

La forme convexe est favorable à l'épanouissement alors que la forme concave est défavorable à l'épanouissement bien qu'il s'effectue néanmoins.

La au moins une pièce d'embarrage (E) peut également être une alternance de forme convexe et concave. Dans cas, le défilement de la mèche sur un rouleau de compression de forme convexe provoque l'épanouissement de la dite mèche puis le défilement de la mèche sur un rouleau de compression de forme concave provoque la rétractation de la mèche et ainsi de suite permettant si besoin d'améliorer l'homogénéité de l'imprégnation, notamment à coeur.

L'expression « rouleau de compression » signifie que la mèche qui défile s'appuie partiellement ou totalement sur la surface dudit rouleau de compression, ce qui induit l'épanouissement de la dite mèche.

Les rouleaux peuvent être en rotation contrôlée ou fixes.

Ils peuvent être lisses, striés ou gorgés.

Avantageusement, les rouleaux sont cylindriques et striés. Lorsque les rouleaux sont striés, deux stries peuvent être présentes en sens opposée l'une de l'autre en partant du centre dudit rouleau permettant ainsi l'éloignement des mèches vers l'extérieure du rouleau ou en sens opposée l'une de l'autre en partant de l'extérieur dudit rouleau permettant ainsi de ramener les mèches vers le centre du rouleau.

Quel que soit le système utilisé pour l'étape de pré-imprégnation, un premier épanouissement se produit lors de cette étape, notamment si l'étape de pré-imprégnation est effectuée avec utilisation de pièces d'embarrage (E'), telle que dans un lit fluidisé avec au moins un embarrage comme décrit ci-dessus.

Un premier épanouissement de la mèche se produit au niveau desdits rouleaux de compression correspondants aux pièces d'embarrage (E') avec « effet de coin » en raison du défilement partiel ou total de ladite mèche sur la ou lesdites pièce(s) d'embarrage (E') et un deuxième épanouissement se produit lors de l'étape de chauffage, au niveau desdits rouleaux de compression correspondants aux pièces d'embarrage (E) en raison du défilement partiel ou total de ladite mèche sur la ou lesdites pièce(s) d'embarrage (E). Ce deuxième épanouissement est précédé lors du passage de la mèche dans le système de chauffage avant son défilement partiel ou total sur la ou lesdites pièce(s) d'embarrage (E) d'une rétractation de la mèche en raison de la fusion du polymère sur ladite mèche.

Ce deuxième épanouissement combiné à la fusion de ladite matrice polymère par le système de chauffage et à la rétractation de la mèche permettent d'homogénéiser la pré-imprégnation et finaliser ainsi l'imprégnation et d'avoir ainsi une imprégnation à coeur et d'avoir un taux élevé de fibres en volume, notamment constant dans au moins 70% du volume de la bande ou ruban, notamment dans au moins 80% du volume de la bande ou ruban, en particulier dans au moins 90% du volume de la bande ou ruban, plus particulièrement dans au moins 95% du volume de la bande ou ruban, ainsi que de diminuer la porosité.

L'épanouissement est fonction du matériau fibreux utilisé. Par exemple, l'épanouissement d'un matériau en fibre de carbone est beaucoup plus important que celui d'une fibre de lin.

L'épanouissement est aussi fonction du nombre de fibres dans la mèche, de leur diamètre moyen et de leur cohésion de par l'ensimage.

Le diamètre dudit au moins un rouleau de compression (embarrage (E)) est compris de 3 mm à 100 mm, préférentiellement de 3 mm à 20 mm, en particulier de 5 mm à 10 mm.

Au-dessous de 3 mm, la déformation de la fibre induite par le rouleau de compression est trop importante.

Avantageusement, le rouleau de compression est cylindrique et non cannelé et en particulier est métallique.

Avantageusement, ladite au moins une pièce d'embarrage (E) est constituée d'au moins un 1 rouleau de compression de forme cylindrique.

Avantageusement, ladite au moins une pièce d'embarrage (E) est constituée de 1 à 15 rouleaux de compression $(R'_1$ à $R'_{15})$ de forme cylindrique, préférentiellement de 3 à 15 rouleaux de compression $(R'_3$ à $R'_{15})$, notamment de 6 à 10 rouleaux de compression $(R'_6$ à $R'_{10})$.

Il est bien évident que quel que soit le nombre de pièces d'embarrages (E) présentes, elles sont toutes situées ou comprises dans l'environnement du système de chauffage, c'est-à-dire qu'elle ne sont pas à l'extérieur du système de chauffage.

Selon une première variante, ladite au moins une pièce d'embarrage (E) est constituée d'un seul rouleau de compression, en particulier de forme cylindrique.

Avantageusement, ladite mèche ou lesdites mèches forme(nt) un angle $\alpha'_1$ de 0,1 à 89°, en particulier de 5 à 75°, notamment de 10 à 45° avec un premier rouleau de compression $R'_1$ et la tangente horizontale audit rouleau de compression $R'_1$, ladite mèche ou lesdites mèches s'épanouissant au contact dudit rouleau de compression $R'_1$.

On ne sortirait du cadre de l'invention si la mèche formait un angle avec ladite tangente horizontale audit rouleau de compression $R'_1$ compris de plus de 89° à 360° (modulo 360°). Dans le cas où la mèche forme un angle d'au moins 360° avec ladite tangente horizontale audit rouleau de compression $R'_1$, cela signifie que la mèche a effectué au moins un tour complet dudit rouleau.

Selon une deuxième variante, ladite au moins une pièce d'embarrage (E) est constituée de deux rouleaux de compression, en particulier de forme cylindrique.

Avantageusement, ladite mèche ou lesdites mèches forme(nt) un angle $\alpha'_1$ de 0 à 180°, en particulier de 5 à 75°, notamment de 10 à 45° avec un premier rouleau de compression $R'_1$ et la tangente horizontale audit rouleau de compression $R'_1$, ladite mèche ou lesdites mèches s'épanouissant au contact dudit rouleau de compression $R'_1$.

On ne sortirait du cadre de l'invention si la mèche formait un angle avec ladite tangente horizontale audit rouleau de compression $R'_1$ compris de plus de 180° à 360° (modulo 360°). Dans le cas où la mèche forme un angle d'au moins 360° avec ladite tangente horizontale audit rouleau de compression $R'_1$, cela signifie que la mèche a effectué au moins un tour complet dudit rouleau.

Avantageusement, un deuxième rouleau $R'_2$ de compression est présent après ledit premier rouleau de compression $R'_1$, ladite mèche ou lesdites mèches formant un angle $\alpha'_2$ de 0 à 180°, en particulier de 5 à 75°, notamment de 10 à 45° avec ledit deuxième rouleau de compression $R'_2$ et la tangente horizontale audit rouleau de compression $R'_2$, ladite mèche ou lesdites mèches s'épanouissant au contact dudit deuxième rouleau de compression.

On ne sortirait du cadre de l'invention si la mèche formait un angle avec ladite tangente horizontale audit rouleau de compression $R'_2$ compris de plus de 180° à 360° (modulo 360°). Dans le cas où la mèche forme un angle d'au moins 360° avec ladite tangente horizontale audit rouleau de compression $R'_2$, cela signifie que la mèche a effectué au moins un tour complet dudit rouleau.

La mèche défile en dessous du rouleau $R'_1$ puis au-dessus du rouleau $R'_2$. Il est bien évident que le défilement de la mèche au-dessus du rouleau $R'_1$ puis au-dessous du rouleau $R'_2$ est également un mode de réalisation de l'invention.

Le rouleau $R'_2$ peut être situé au-dessus du rouleau $R'_1$, ledit rouleau $R'_1$ précédant ledit rouleau $R'_2$.

Il est de la même manière évident que le rouleau $R'_2$ peut se situer au-dessous du rouleau $R'_1$.

La différence de hauteur entre le rouleau $R'_1$ et le rouleau $R'_2$ est supérieure ou égale à 0.

Avantageusement, la différence de hauteur entre le rouleau $R'_1$ et le rouleau $R'_2$ est comprise de 1 à 20 cm, préférentiellement de 2 à 15 cm, en particulier de 3 à 10 cm.

Avantageusement, les deux rouleaux sont au même niveau et de même diamètre et la différence de hauteur est alors nulle.

La distance entre les deux rouleaux est comprise de 1 à 20 cm, préférentiellement de 2 à 15 cm, en particulier de 3 à 10 cm.

Selon une troisième variante, ladite au moins une pièce d'embarrage (E) est constituée de 3 rouleaux de compression, en particulier de forme cylindrique.

Avantageusement, ladite mèche ou lesdites mèches forme(nt) un angle $\alpha'_1$ de 0,1 à 89°, en particulier de 5 à 75°, notamment de 10 à 45° avec un premier rouleau de compression $R'_1$ et la tangente horizontale audit rouleau de compression $R'_1$, ladite mèche ou lesdites mèches s'épanouissant au contact dudit premier rouleau de compression.

On ne sortirait du cadre de l'invention si la mèche formait un angle avec ladite tangente horizontale audit rouleau de compression $R'_1$ compris de plus de 89° à 360° (modulo 360°).

Dans le cas où la mèche forme un angle d'au moins 360° avec ladite tangente horizontale audit rouleau de compression $R'_1$, cela signifie que la mèche a effectué au moins un tour complet dudit rouleau.

Avantageusement, le deuxième rouleau est présent après ledit premier rouleau , ladite mèche ou lesdites mèches formant un angle $\alpha'_2$ de 0 à 180°, en particulier de 5 à 75°, notamment de 10 à 45° avec le deuxième rouleau de compression $R'_2$ et la tangente horizontale audit rouleau de compression $R'_2$, ladite mèche ou lesdites mèches s'épanouissant au contact dudit deuxième rouleau de compression.

On ne sortirait du cadre de l'invention si la mèche formait un angle avec ladite tangente horizontale audit rouleau de compression $R'_2$ compris de plus de 180° à 360° (modulo 360°). Dans le cas où la mèche forme un angle d'au moins 360° avec ladite tangente horizontale audit rouleau de compression $R'_2$, cela signifie que la mèche a effectué au moins un tour complet dudit rouleau.

Avantageusement, le troisième rouleau de compression $R'_3$ est présent après ledit deuxième rouleau de compression $R'_2$, ladite mèche ou lesdites mèches formant un angle $\alpha'_3$ de 0 à 180°, en particulier de 5 à 75°, notamment de 10 à 45° avec ledit troisième rouleau de compression R'$_3$ et la tangente horizontale audit rouleau de compression R'$_3$, ladite mèche ou lesdites mèches s'épanouissant au contact dudit troisième rouleau de compression R'$_3$.

On ne sortirait du cadre de l'invention si la mèche formait un angle avec ladite tangente horizontale audit rouleau de compression R'$_3$ compris de plus de 180° à 360° (modulo 360°). Dans le cas où la mèche forme un angle d'au moins 360° avec ladite tangente horizontale audit rouleau de compression R'$_3$, cela signifie que la mèche a effectué au moins un tour complet dudit rouleau.

La mèche défile en dessous du rouleau R'$_1$ puis au-dessus du rouleau R'$_2$ et ensuite au-dessous du rouleau R'$_3$.

Il est bien évident que le défilement de la mèche au-dessus du rouleau R'$_1$ puis au-dessous du rouleau R'$_2$ et ensuite au-dessus du rouleau R'$_3$ est également un mode de réalisation de l'invention.

Les trois rouleaux peuvent être au même niveau, mais avantageusement, le rouleau R'$_2$ est situé au-dessus du rouleau R'$_1$, et le rouleau R'$_3$ est situé au-dessous du rouleau R'$_2$, ledit rouleau R'$_1$ précédant ledit rouleau R'$_2$ qui lui-même précède R'$_3$.

Toutes les positions géométriques relatives entre les trois rouleaux sont possibles.

La différence de hauteur entre le rouleau le plus bas et le rouleau le plus haut est supérieure ou égale à 0.

Avantageusement, la différence de hauteur entre chacun des trois rouleaux est comprise de 1 à 20 cm, préférentiellement de 2 à 15 cm, en particulier de 3 à 10 cm.

La distance entre chacun des trois rouleaux est comprise de 1 à 20 cm, préférentiellement de 2 à 15 cm, en particulier de 3 à 10 cm.

Avantageusement, le rouleau R'$_1$ précède le rouleau R'$_3$ et sont au même niveau et le rouleau R'$_2$ se situe entre le rouleau R'$_1$ et le rouleau R'$_3$ et se situe au-dessus des deux autres rouleaux.

La figure 1 présente un exemple de système de chauffage présentant trois rouleaux de compression.

La longueur l entre l'entrée du système de chauffage et le premier rouleau R'$_1$ est variable en fonction du polymère utilisé et de la vitesse de défilement de la bande.

l représente donc la longueur suffisante pour que le polymère soit en fusion, au moins partielle, en particulier totale, à l'entrée du premier rouleau.

Dans un mode de réalisation, quatre (4) à quinze (15) rouleaux peuvent être présents.

De manière générale, l'angle ou les angles α'$_{4-i}$ (i étant de 4 à 15) formé par ladite ou lesdites mèches avec les rouleaux R'$_{4-i}$ est(sont) compris de 0 à 180°, en particulier de 5 à 75°, notamment de 10 à 45°.

De manière générale, la différence de hauteur entre chaque rouleau R'$_i$ et entre le rouleau le plus bas et le rouleau le plus haut est supérieure ou égale à 0.

Avantageusement, la différence de hauteur entre chacun des rouleaux R'$_i$ est comprise de 1 à 20 cm, préférentiellement de 2 à 15 cm, en particulier de 3 à 10 cm.

De manière générale, la distance entre chacun des rouleaux R'$_i$ est comprise de 1 à 20 cm, préférentiellement de 2 à 15 cm, en particulier de 3 à 10 cm.

Avantageusement, le pourcentage d'épanouissement lors de l'étape de chauffage entre l'entrée du premier rouleau de compression R'$_1$ et la sortie du dernier rouleau de compression R'$_i$ est d'environ 0 à 300%, en particulier de 0 à 50%.

Avantageusement, le pourcentage d'épanouissement lors de l'étape de chauffage entre l'entrée du premier rouleau de compression R'$_1$ et la sortie du dernier rouleau de compression R'$_i$ est d'environ 1 à 50%.

Avantageusement, ledit polymère thermoplastique est un polymère thermoplastique non réactif. Le système de chauffage permet donc la fusion dudit polymère thermoplastique après pré-imprégnation comme décrit ci-dessus.

Avantageusement, ledit polymère thermoplastique est un prépolymère réactif susceptible de réagir sur lui-même ou avec un autre prépolymère, en fonction des fins de chaîne portées par ledit prépolymère, ou encore avec un allongeur de chaîne, ledit polymère réactif étant optionnellement polymérisé lors de l'étape de chauffage.

En fonction de la température et/ou de la vitesse de défilement de la mèche, le système de chauffage permet la fusion dudit prépolymère thermoplastique après pré-imprégnation comme décrit ci-dessus sans polymérisation dudit prépolymère avec lui-même ou avec un allongeur de chaîne ou desdits prépolymères entre eux.

Le taux de fibres dans le matériau fibreux imprégné est fixé lors de l'étape de chauffage et avantageusement il est compris de 45 à 65 % en volume, de préférence de 50 à 60% en volume, notamment de 54 à 60%.

En dessous de 45% de fibres, le renfort n'a pas d'intérêt pour ce qui concerne les propriétés mécaniques.

Au-dessus de 65%, les limites du procédé sont atteintes et les propriétés mécaniques sont reperdues.

Avantageusement, le taux de porosité dans ledit matériau fibreux imprégné est inférieur à 10%, notamment inférieur à 5%, en particulier inférieur à 2%.

Une deuxième étape de chauffage peut être effectuée après l'étape de calandrage ci-dessous.

Cette deuxième étape de chauffage permet de corriger les éventuels défauts, notamment d'homogénéité, qui pourraient subsister après la première étape de chauffage.

Elle est effectuée avec le même système que pour la première étape.

Avantageusement, le système de chauffage de cette deuxième étape est constitué de deux rouleaux.

De manière facultative, lesdites étapes de pré-imprégnation et d'imprégnation sont complétées par une étape de conformation dans une filière régulée à une température constante, ladite étape de conformation étant réalisée avant ladite étape de calandrage. De manière facultative, cette filière est une filière d'extrusion en tête d'équerre et permet le recouvrement de ladite mèche unique ou de ladite pluralité de mèches parallèles après imprégnation par la poudre, ladite étape de recouvrement étant réalisée avant ladite étape de calandrage, par un polymère thermoplastique fondu, pouvant être identique ou différent dudit polymère de pré-imprégnation, ledit polymère fondu étant de préférence de même nature que ledit polymère de pré-imprégnation.

Pour cela, à la sortie du système de chauffage est connecté un dispositif de recouvrement pouvant comporter une tête d'équerre de recouvrement, comme cela est également décrit dans le brevet EP0406067. Le polymère de recouvrement peut être identique ou différent de la poudre polymère en cuve. De préférence, il est de même nature. Un tel recouvrement permet non seulement de compléter l'étape d'imprégnation des fibres pour obtenir un taux volumique final de polymère dans la gamme souhaitée et éviter la présence à la surface de la mèche imprégnée, d'un taux de fibres localement trop important, qui nuirait au soudage des tapes lors de la fabrication de la pièce composite, notamment pour l'obtention de matériaux fibreux dits « prêts à l'emploi » de bonne qualité, mais également pour améliorer les performances du matériau composite obtenu.

## Etape de mise en forme

Optionnellement, une étape de mise en forme de la mèche ou desdites mèches parallèles dudit matériau fibreux imprégné est effectuée.

Un système de calandrage tel que décrit dans WO 2015/121583 peut être utilisé.

Avantageusement, elle est effectuée par calandrage au moyen d'au moins une calandre chauffante sous forme de ruban unique unidirectionnel ou d'une pluralité de rubans parallèles unidirectionnels avec, dans ce dernier cas, ladite calandre chauffante comportant une pluralité de gorges de calandrage, de préférence jusqu'à 200 gorges de calandrage, en conformité avec le nombre desdits rubans et avec une pression et/ou un écartement entre les rouleaux de ladite calandre régulés par un système asservi.

Cette étape est toujours effectuée après l'étape de chauffage s'il n'y en a qu'une ou bien entre la première étape de chauffage et la deuxième étape de chauffage lorsque les deux coexistent.

Avantageusement, l'étape de calandrage est réalisée au moyen d'une pluralité de calandres chauffantes, montées en parallèle et/ou en série par rapport au sens de défilement des mèches de fibres.

Avantageusement, ladite (ou lesdites) calandre(s) chauffante(s) comprend (comprennent) un système de chauffage intégré par induction ou par microondes, de préférence par microondes, couplé à la présence de charges carbonées dans ledit polymère thermoplastique ou mélange de polymères thermoplastiques.

Selon un autre mode de réalisation, une presse à bande est présente entre le système de chauffage et la calandre.

Selon encore un autre mode de réalisation, une filière chauffante est présente entre le système de chauffage et la calandre.

Selon un autre mode de réalisation, une presse à bande est présente entre le système de chauffage et la calandre et une filière chauffante est présente entre la presse à bande et la calandre.

Selon un autre aspect, la présente invention concerne un ruban unidirectionnel de matériau fibreux imprégné, en particulier ruban enroulé sur bobine, caractérisé en ce qu'il est obtenu par un procédé tel que défini ci-dessus.

Avantageusement ledit ruban a une largeur (I) et une épaisseur (ep) adaptées à une dépose par robot dans la fabrication de pièces en trois dimensions, sans besoin de refente, et de préférence a une largeur (I) d'au moins 5 mm et pouvant aller jusqu'à 400mm, de préférence comprise entre 5 et 50 mm et de manière encore plus préférée comprise entre 5 et 15mm.

Avantageusement, le polymère thermoplastique dudit ruban est un polyamide tel que défini ci-dessus

Avantageusement, il est choisi parmi notamment un polyamide aliphatique tel que PA 6, PA 11, PA 12, PA 66, PA 46, PA 610, PA 612, PA 1010, PA 1012, PA 11/1010 ou PA 12/1010 ou un polyamide semi-aromatique tel que un PA MXD6 et un PA MXD10 ou choisi parmi PA 6/6T, PA 6I/6T, PA 66/6T, PA 11/10T, PA 11/6T/10T, PA MXDT/10T, PA MPMDT/10T, PA BACT/6T, PA BACT/10T et PA BACT/10T/6T, PA BACT/10T/11, PA BACT/6T/11 un PVDF, un PEEK, PEKK et un PEI ou un mélange de ceux-ci.

Selon un autre aspect, la présente invention concerne l'utilisation du procédé tel que défini ci-dessus, pour la fabrication de rubans calibrés adaptés à la fabrication de pièces composites en trois dimensions, par dépose automatique desdits rubans au moyen d'un robot.

Selon encore un autre aspect, la présente invention concerne l'utilisation d'un ruban de matériau fibreux imprégné, tel que défini ci-dessus, dans la fabrication de pièces composites en trois dimensions.

Avantageusement, ladite fabrication desdites pièces composites concerne les domaines des transports, en particulier automobile, du pétrole et du gaz, en particulier l'offshore, du stockage de gaz, aéronautique, nautique, ferroviaire ; des énergies renouvelables, en particulier éolienne, hydrolienne, les dispositifs de stockage d'énergie, les panneaux solaires ; des panneaux de protection thermique ; des sports et loisirs, de la santé et du médical et de l'électronique.

Selon, un autre aspect, la présente invention concerne une pièce composite en trois dimensions, caractérisée en ce qu'elle résulte de l'utilisation d'au moins un ruban unidirectionnel de matériau fibreux pré imprégné tel que défini ci-dessus.

**Description des modes de réalisation**

**Lit fluidisé combiné à une ou deux étapes de chauffage**

Avantageusement, le matériau fibreux est choisi parmi la fibre de carbone et la fibre de verre.

Avantageusement, le prépolymère thermoplastique utilisé pour imprégner la fibre de carbone est choisi parmi un polyamide, notamment un polyamide aliphatique tel que PA 11, PA 12, un PA 11/1010 et un PA 12/1010, un polyamide semi-aromatique, en particulier un PA 11/10T, un PA 11/6T/10T, un PA MXDT/10T, un PA MPMDT/10T, un PA BACT/10T, un PA BACT/6T, un PA BACT/10T/6T, PA BACT/10T/11, PA BACT/6T/11 un PA MXD6 et un PA MXD10, un PEEK, PEKK et un PEI ou un mélange de ceux-ci.

Avantageusement, le prépolymère thermoplastique utilisé pour imprégner la fibre de verre est choisi parmi un polyamide, notamment un polyamide aliphatique tel que PA 11, PA 12, un PA 11/1010 et un PA 12/1010, un polyamide semi-aromatique, en particulier un PA 11/10T, un PA 11/6T/10T, un PA MXDT/10T, un PA MPMDT/10T, un PA BACT/10T, un PA BACT/6T, un PA BACT/10T/6T, PA BACT/10T/11, PA BACT/6T/11 un PA MXD6 et un PA MXD10, un PEEK, PEKK et un PEI ou un mélange de ceux-ci.

Avantageusement, dans les compositions dans lesquelles deux rouleaux de compression sont présents dans le lit fluidisé, le rouleau $R_2$ est au-dessus du rouleau $R_1$ par rapport au fond de la cuve, en particulier $H_2$-$H_1$ est compris de 1cm à 30cm, préférentiellement de 1 à 10cm, en particulier de 1cm à 3cm, notamment environ 2cm et l'angle $\alpha_2$ est compris de 0 à 90°, en particulier de 25 à 45°C, en particulier de 25 à 35° et la mèche passe au-dessus de $R_2$.

Ces modes de réalisation correspondent à la figure 5.

Avantageusement, dans les compositions dans lesquelles deux rouleaux de compression sont présents dans le lit fluidisé, le rouleau $R_2$ est au-dessus du rouleau $R_1$ par rapport au fond de la cuve, en particulier $H_2$-$H_1$ est compris de 1cm à 30cm, notamment environ 2cm et l'angle $\alpha_2$ est compris de 90 à 180°C, en particulier de 115 à 135°, notamment de 115 à 125°, et la mèche passe en dessous de $R_2$.

Avantageusement, les différents matériaux fibreux obtenus avec les modes de réalisation par pré-imprégnation en lit fluidisé font ensuite l'objet d'une étape de chauffage directement après l'étape de pré-imprégnation avec un système de chauffage IR à un, deux ou trois rouleaux.

**Projection de la poudre par une (ou des) buse(s) ou un (ou des) pistolet(s) par voie sèche dans une cuve combinée à une ou deux étapes de chauffage**

Avantageusement, le matériau fibreux est choisi parmi la fibre de carbone et la fibre de verre. Avantageusement, le polymère thermoplastique utilisé pour pré-imprégner la fibre de carbone est choisi parmi un polyamide, notamment un polyamide aliphatique tel que PA 11, PA 12, PA 11/1010 ou PA 12/1010, ou un polyamide semi-aromatique, en particulier un PA MXD6 et un PA MXD10, un PA 11/10T, un PA 11/6T/10T, un PA MXDT/10T ou un PA MPMDT/10T, ou PA BACT/10T, un PA BACT/6T, un PA BACT/10T/6T, PA BACT/10T/11, PA BACT/6T/11 un PEEK, un PEKK et un PEI ou un mélange de ceux-ci.

Avantageusement, le polymère thermoplastique utilisé pour pré-imprégner la fibre de verre est choisi parmi un polyamide, notamment un polyamide aliphatique tel que PA 11, PA 12, PA 11/1010 ou PA 12/1010, ou un polyamide semi-aromatique, en particulier un PA MXD6 et un PA MXD10, un PA 11/10T, un PA 11/6T/10T, un PA MXDT/10T, un PA MPMDT/10T, ou PA BACT/10T, un PA BACT/6T, un PA BACT/10T/6T, PA BACT/10T/11, PA BACT/6T/11 un PEEK, un PEKK et un PEI ou un mélange de ceux-ci.

Avantageusement, dans les compositions dans lesquelles deux rouleaux de compression sont présents dans la cuve, le rouleau R"$_2$ est au-dessus du rouleau R"$_1$ par rapport au fond de la cuve, en particulier $H_2$-$H_1$ est compris de 1 cm à 30 cm, préférentiellement de 1 à 10cm, en particulier de 1cm à 3cm, notamment environ 2 cm et l'angle $\alpha$"$_2$ est compris de 0 à 90°, en particulier de 25 à 45°C, en particulier de 25 à 35° et la mèche passe au-dessus de R"$_2$. Ces modes de réalisation correspondent à la figure 13.

Avantageusement, dans les compositions dans lesquelles deux rouleaux de compression sont présents dans la cuve, le rouleau R"$_2$ est au-dessus du rouleau R"$_1$ par rapport au fond de la cuve, en particulier $H_2$-$H_1$ est compris de 1cm à 30cm, notamment environ 2cm et l'angle $\alpha$"$_2$ est compris de 90 à 180°C, en particulier de 115 à 135°, notamment de 115 à 125°, et la mèche passe en dessous de R"$_2$.

Avantageusement, les différents matériaux fibreux obtenus avec les modes de réalisation par pré-imprégnation par projection de ladite poudre par une (ou des) buse(s) ou un (ou des) pistolet(s) par voie sèche dans une cuve font ensuite l'objet d'une étape de chauffage directement après l'étape d'imprégnation avec un système de chauffage IR à un, deux ou trois rouleaux.

Optionnellement, une deuxième étape de chauffage avec un système de chauffage IR à un ou deux rouleaux est effectuée.

**Brève description des figures**

La figure 1 présente un schéma d'un système de chauffage selon l'invention à trois rouleaux.

La figure 2 détaille une cuve (10) comprenant un lit fluidisé (12) avec une pièce d'embarrage, réglable en hauteur (22). Le bord de l'entrée de la cuve est équipé d'un rouleau rotatif 23a sur lequel défile la mèche 21a et le bord de la sortie cuve est équipé d'un rouleau rotatif 23b sur lequel défile la mèche 21b.

La figure 3 présente décrit un mode de réalisation à un seul rouleau de compression, avec une cuve (10) comprenant un lit fluidisé (12) dans lequel un seul rouleau de compression cylindrique (24) est présent et montrant l'angle $\alpha_1$. Les flèches au niveau de la fibre indiquent le sens de défilement de la fibre.

La figure 4 présente un mode de réalisation, sans être limité à celui-ci, à deux rouleaux de compression $R_1$ et $R_2$, $R_1$ précédant $R_2$, avec une cuve (10) comprenant un lit fluidisé (12) dans lequel les deux rouleaux de compression cylindriques sont à des hauteurs différentes par rapport au fond de la cuve ($R_2$ à une hauteur $H_2$ au-dessus de $R_1$ à une hauteur $H_1$) sont présents et montrant l'angle $\alpha_1$ et $\alpha_2$.

Les flèches au niveau de la mèche de fibre indiquent le sens de défilement de la mèche.

La figure 5 présente un exemple de mode de réalisation avec une cuve (10) comprenant un lit fluidisé (12) dans lequel les deux rouleaux de compression $R_1$ et $R_2$ sont cylindriques, au même niveau l'un par rapport à l'autre et côte à côte et montrant l'angle $\alpha_1$, et l'angle $\alpha_2 = 0°$ et la mèche passant entre les 2 rouleaux)

La figure 6 présente un exemple de mode de réalisation avec une cuve (10) comprenant un lit fluidisé (12) dans lequel les deux rouleaux de compression $R_1$ et $R_2$ sont cylindriques, au même niveau l'un par rapport à l'autre et côte à côte et montrant l'angle $\alpha_1$, et l'angle $\alpha_2 = 90°$ et la mèche passant au-dessous de $R_2$.

La figure 7 présente un exemple de mode de réalisation avec une cuve (20) comprenant un lit fluidisé (12) dans lequel deux rouleaux de compression cylindriques $R_1$ et $R_2$, $R_1$ précédant $R_2$, à des niveaux différents sont présents et montrant l'angle $\alpha_1$ et $\alpha_2$ et la mèche passant sous le rouleau R2.

La figure 8 présente un mode de réalisation avec une cuve (10) comprenant un lit fluidisé (12) à deux rouleaux de compression $R_1$ et $R_2$, $R_1$ précédant $R_2$, et un rouleau de compression $R_3$ et montrant les angles $\alpha_1$, $\alpha_2$ et $\alpha_3$.

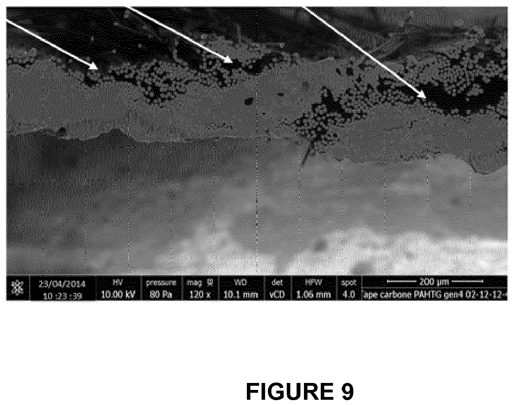

La figure 9 présente une photo prise au microscope électronique à balayage d'une vue en coupe d'une mèche de fibre de carbone ¼" Fibre carbone Toray, 12K T700S M0E imprégnée par une poudre de polyamide PA11/6T/10T de D50= 100$\mu$m selon le procédé décrit dans WO 2015/121583 (après calandrage).

Le procédé selon WO 2015/121583 fait apparaître un manque d'homogénéité à plusieurs endroits de la mèche imprégnée schématisés par les flèches blanches.

La figure 10 présente la fluidisation en fonction du débit d'air. Le débit d'air appliqué au lit fluidisé doit être compris entre le débit minimum de fluidisation (Umf) et le débit minimum de bullage (Umf)

La figure 11 détaille une cuve (20) avec une pièce d'embarrage, réglable en hauteur (22). Le bord de l'entrée de la cuve est équipé d'un rouleau rotatif 23a sur lequel défile la mèche 21a et le bord de la sortie cuve est équipé d'un rouleau rotatif 23b sur lequel défile la mèche 21b.

La figure 12 présente décrit un mode de réalisation à un seul rouleau de compression, avec une cuve (30) comprenant un pistolet de projection (31) de poudre (32) dans laquelle un seul rouleau de compression cylindrique (33) est présent et montrant l'angle $\alpha''_1$.

Les flèches au niveau de la fibre indiquent le sens de défilement de la fibre.

La figure 13 présente un mode de réalisation, sans être limité à celui-ci, à deux rouleaux de compression $R''_1$ et $R''_2$, $R''_1$ précédant $R''_2$, avec une cuve (30) comprenant chacun un pistolet de projection (31) de poudre (32) et dans laquelle les deux rouleaux de compression cylindriques sont à des hauteurs différentes par rapport au fond de la cuve ($R''_2$ à une hauteur $H_2$ au-dessus de $R''_1$ à une hauteur $H_1$) sont présents et montrant l'angle $\alpha''_1$ et $\alpha''_2$. Les flèches au niveau de la mèche de fibre indiquent le sens de défilement de la mèche.

La figure 14 présente un exemple de mode de réalisation avec une cuve (30) comprenant un pistolet de projection (31) de poudre (32) dans laquelle les deux rouleaux de compression $R''_1$ et $R''_2$ sont cylindriques, au même niveau l'un par rapport à l'autre et côte à côte et montrant l'angle $\alpha''_1$, et l'angle $\alpha''_2 = 0°$ et la mèche passant entre les 2 rouleaux)

La figure 15 présente un exemple de mode de réalisation avec une cuve (30) comprenant chacun un pistolet de projection (31) de poudre (32) et dans laquelle les deux rouleaux de compression R"$_1$ et R"$_2$ sont cylindriques, au même niveau l'un par rapport à l'autre et côte à côte et montrant l'angle α"$_1$, et l'angle α"$_2$ = 90°et la mèche passant au-dessous de R"$_2$.

La figure 16 présente un exemple de mode de réalisation avec une cuve (30) comprenant chacun un pistolet de projection (31) de poudre (32) et dans laquelle deux rouleaux de compression cylindriques R"$_1$ et R"$_2$, R"$_1$ précédant R"$_2$, à des niveaux différents sont présents et montrant l'angle α"$_1$ et α"$_2$ et la mèche passant sous le rouleau R"$_2$.

La figure 17 présente un mode de réalisation avec une cuve (30) à deux rouleaux de compression R"$_1$ et R"$_2$, R"$_1$ précédant R"$_2$, comprenant chacun un pistolet de projection (31) de poudre (32) et un rouleau de compression R"$_3$ comprenant un pistolet de projection (31) de poudre (32) et montrant les angles α"$_1$, α"$_2$ et α"$_3$.

La figure 18 présente une photo prise au microscope électronique à balayage d'une vue en coupe d'une mèche de fibre de carbone ¼" Fibre carbone Toray, 12K T700S 31E imprégnée par une poudre de PA MPMDT/10T de D50= 120 μm selon le procédé avec des embarrages non thermostatés.

Le diamètre d'une fibre représente 7 μm.

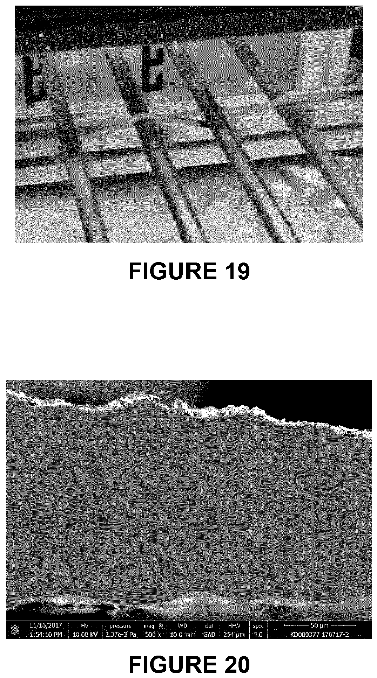

La figure 19 présente la vue de l'embarrage encrassé, car non thermostaté, après 2h d'utilisation.

La figure 20 présente une photo prise au microscope électronique à balayage d'une vue en coupe d'une mèche de fibre de carbone ¼" Fibre carbone Toray, 12K T700S 31E imprégnée par une poudre de polyamide PA MPMDT/10T de D50= 120 μm selon le procédé de l'invention exemple 2.

Le diamètre d'une fibre représente 7 μm.

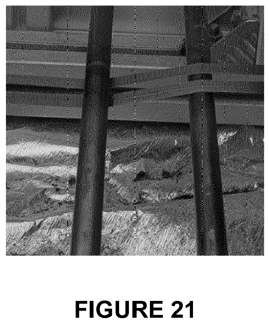

La figure 21 présente la vue de l'embarrage non encrassé car thermostaté et rotatif controlé, après 1 journée d'utilisation

Exemples

Les exemples suivants illustrent de façon non limitative la portée de l'invention.

**Exemple comparatif 1** : **mode opératoire général comprenant une étape de pré-imprégnation d'un matériau fibreux (fibre de carbone) par une poudre de MPMDT/10T (67/33 % molaire) dans une cuve comprenant un lit fluidisé munie d'un seul rouleau et une étape de chauffage par Infra Rouge avec rouleau non thermostaté.**

Le mode opératoire suivant a été effectué:

**Etape de pré-imprégnation**

- Un rouleau de compression cylindrique R$_1$ dans la cuve (L= 500 mm, l= 500mm, H= 600mm), diamètre 25 mm.
- Temps de séjour de 0,3 sec dans la poudre
- Angle α$_1$ de 25°
- Epanouissement environ 100 % (soit une largeur multipliée par 2) pour une mèche en fibre de carbone de carbone 1/4" Toray, 12K T700S 31E

  PA MPMDT/10T (67/33 %molaire) : Tc = 230°C, Tf=272°C
  Poudre de MPMDT/10T (67/33 % molaire): D50 =120 μm, (D10=45μm, D90= 280μm).

- bord de la cuve équipé d'un rouleau fixe.

Le matériau fibreux (mèche de fibre de carbone ¼") a été pré-imprégné par un polymère (MPMDT/10T de granulométrie ci-dessus définie) selon ce mode opératoire.

**Etape de chauffage**

Le système de chauffage utilisé est celui décrit dans la figure 1 mais avec huit rouleaux cylindriques métalliques R'$_1$ à R'$_8$ fixes de diamètre 15 mm.

La vitesse d'avancement de la mèche est de 10 m/min

L'infrarouge utilisé présente une puissance de 25 kW, la hauteur entre l'infrarouge et le rouleau supérieur est de 4 cm et la hauteur entre l'infrarouge et les rouleaux inférieurs est de 9 cm.

Après 30mn de fonctionnement, les embarrages ont atteint une température de 340°C (mesure par thermocouple)

Les angles α'$_1$ à α'$_8$ sont identiques et de 25°.

La hauteur h est de 20 mm

La longueur I est de 1000 mm

Les huit rouleaux sont distants chacun de 43 mm.

Calandrage au moyen de deux calandres montées en série équipées d'un IR de 1kW chacune après l'étape de chauffage.

La figure 18 présente le matériau fibreux imprégné obtenu avec le PA MPMDT/10T dans ces conditions de procédé sans embarrage thermostaté : une bonne qualité d'imprégnation a été obtenue.

La figure 19 montre l'encrassement des embarrages après 2 h de production : on observe l'accumulation de petites fibrilles de carbone, collées par la résine de PA MPMDT/10T qui s'est accumulée au fil du temps.

**Exemple 2 : mode opératoire général comprenant une étape de pré-imprégnation d'un matériau fibreux (fibre de carbone) par une poudre de MPMDT/10T (67/33 % molaire) dans une cuve comprenant un lit fluidisé munie d'un seul rouleau et une étape de chauffage par Infra Rouge avec rouleau thermostaté à 245°C.**

Le même protocole que pour l'exemple 1 est utilisé à la différence que les rouleaux sous infrarouge sont thermostatés à 245°C

La figure 20 présente le matériau fibreux imprégné obtenu avec le PA MPMDT/10T de l'exemple comparatif 1 et des rouleaux thermostatés à 245°C.

L'imprégnation du matériau fibreux est identique à celle obtenue sans rouleaux thermostatés.

La figure 21 montre que dans ce cas, l'encrassement des embarrages est fortement réduit.

Cela démontre l'efficacité du procédé d'imprégnation par une poudre sèche en lit fluidisé avec un rouleau de compression et contrôle du temps de séjour dans la poudre combiné à une étape de chauffage utilisant des rouleaux thermostatés.

**Exemple 3 : Détermination du taux de porosité par analyse d'image**

La porosité a été déterminée par analyse d'image sur une mèche de fibre de carbone 1/4" imprégnée par du MPMDT/10T en lit fluidisé avec embarrages en amont suivie d'une étape de chauffage telle que définie ci-dessus.

Elle est de moins de 5%.

**Exemple 4 : Détermination du taux de porosité l'écart relatif entre densité théorique et densité expérimentale (méthode générale)**

a) Les données requises sont :

- La densité de la matrice thermoplastique
- La densité des fibres
- Le grammage du renfort :

  - masse linéique (g/m) par exemple pour une tape ¼ de pouce (issu d'un seul rowing)
  - masse surfacique (g/m$^2$) par exemple pour une tape plus large ou un tissu

b) Mesures à réaliser :

Le nombre d'échantillons doit être au minimum de 30 pour que le résultat soit représentatif du matériau étudié. Les mesures à réaliser sont :

- La dimension des échantillons prélevés:

  - Longueur (si masse linéique connue).
  - Longueur et largeur (si masse surfacique connue).

- La densité expérimentale des échantillons prélevés :

  - Mesures de masse dans l'air et dans l'eau.

- La mesure du taux de fibres est déterminée selon ISO 1172 :1999 ou par analyse thermogravimétrique (ATG) telle que déterminé par exemple dans le document B. Benzler, Applikationslabor, Mettler Toledo, Giesen, UserCom 1/2001.

La mesure du taux de fibres de carbone peut être déterminée selon ISO 14127 :2008. Détermination du taux de fibres massique théorique :

a) Détermination du taux de fibres massique théorique :

[Math 1]

$$\%Mf_{th} = \frac{m_l . L}{Me_{air}}$$

Avec

$m_l$ la masse linéique de la tape,
$L$ la longueur de l'échantillon et
$Me_{air}$ la masse de l'échantillon mesuré dans l'air.

La variation du taux massique de fibres est supposée être directement liée à une variation du taux de matrice sans prendre en compte la variation de la quantité des fibres dans le renfort.
b) Détermination de la densité théorique :

[Math 2]

$$d_{th} = \frac{1}{\frac{1 - \%Mf_{th}}{d_m} + \frac{\%Mf_{th}}{d_f}}$$

Avec $d_m$ et $d_f$ les densités respectives de la matrice et des fibres.
La densité théorique ainsi calculée est la densité accessible s'il n'y a aucune porosité dans les échantillons.
c) Evaluation de la porosité :
La porosité est alors l'écart relatif entre densité théorique et densité expérimentale.

## Revendications

1. Procédé de fabrication d'un matériau fibreux imprégné comprenant un matériau fibreux en fibres continues et au moins une matrice polymère thermoplastique, **caractérisé en ce que** ledit matériau fibreux imprégné est réalisé en un ruban unique unidirectionnel ou en une pluralité de rubans parallèles unidirectionnels et **caractérisé en ce que** ledit procédé comprend une étape de pré-imprégnation dudit matériau fibreux se présentant sous forme d'une mèche ou de plusieurs mèches parallèles par ledit polymère thermoplastique et au moins une étape de chauffage de la matrice polymère thermoplastique permettant la fusion ou le maintien en fusion dudit polymère thermoplastique après pré-imprégnation,
ladite au moins une étape de chauffage étant effectuée au moyen d'au moins une pièce d'embarrage (E) conductrice de la chaleur et d'au moins un système de chauffage, à l'exception d'une calandre chauffante,
ladite au moins une pièce d'embarrage (E) étant thermostatée à une température comprise, pour un polymère thermoplastique semi-cristallin, de Tc-30°C à Tf+50°C dudit polymère, de préférence comprise de Tc à Tf, et pour un polymère amorphe, de Tg+50°C à Tg+250°C dudit polymère, de préférence de Tg +100°C à Tg+200°C,
ladite mèche ou lesdites mèches étant en contact avec une partie ou la totalité de la surface de ladite au moins une pièce d'embarrage (E) et défilant partiellement ou totalement à la surface de ladite au moins une pièce d'embarrage (E) présente au niveau du système de chauffage,
et le taux de porosité dans ledit matériau fibreux imprégné étant inférieur à 10%, notamment inférieur à 5%, en particulier inférieur à 2%.

2. Procédé selon la revendication 1, **caractérisé en ce que** ladite pièce d'embarrage thermostatée (E) est en rotation contrôlée, en particulier de telle manière que la vitesse tangentielle à la surface de l'embarrage soit inférieure à 2 fois la vitesse de la mèche ou supérieure à 2 fois la vitesse de ladite mèche.

3. Procédé selon la revendication 1 ou 2, **caractérisé en ce que** ledit matériau fibreux imprégné est non flexible.

4. Procédé selon l'une des revendications 1 à 3, **caractérisé en ce que** la pré-imprégnation est effectuée avec un système choisi parmi un lit fluidisé, une pulvérisation par pistolet et la voie fondue, notamment à grande vitesse, en particulier la pré-imprégnation est effectuée en lit fluidisé.

5. Procédé selon la revendication 4, **caractérisé en ce que** un ou plusieurs embarrage(s) (E") est(sont) présent(s) en amont dudit système.

6. Procédé selon l'une des revendications 1 à 5, **caractérisé en ce que** une étape de pré-imprégnation et une étape de chauffage sont effectuées, ladite étape de chauffage étant immédiatement consécutive à l'étape de pré-imprégnation.

7. Procédé selon l'une des revendications 1 à 6, **caractérisé en ce que** ledit au moins un système de chauffage est choisi parmi une lampe infra rouge, une lampe UV et un chauffage par convection.

8. Procédé selon l'une des revendications 1 à 7, caractérisé en que ladite au moins une pièce d'embarrage (E) est un rouleau de compression R'i de forme convexe, concave ou cylindrique, de préférence cylindrique.

9. Procédé selon la revendication 8, **caractérisé en ce que** ladite au moins une pièce d'embarrage (E) est constituée de 1 à 15 rouleaux de compression ($R'_1$ à $R'_{15}$) de forme cylindrique, préférentiellement de 3 à 15 rouleaux de compression ($R'_3$ à $R'_{15}$), notamment de 6 à 10 rouleaux de compression ($R'_6$ à $R'_{10}$).

10. Procédé selon l'une des revendications 8 ou 9, **caractérisé en ce que** ladite mèche ou lesdites mèches forme(nt) un angle $\alpha'_1$ de 0,1 à 89°, en particulier de 5 à 75°, notamment de 10 à 45° avec un premier rouleau de compression $R'_1$ et la tangente horizontale audit rouleau $R'_1$, ladite mèche ou lesdites mèches s'épanouissant au contact dudit premier rouleau de compression.

11. Procédé selon la revendication 8, **caractérisé en ce que** un deuxième rouleau $R'_2$ est présent après ledit premier rouleau de compression $R'_1$, ladite mèche ou lesdites mèches formant un angle $\alpha'_2$ de 0 à 180°, en particulier de 5 à 75°, notamment de 10 à 45° avec ledit deuxième rouleau de compression $R'_2$ et la tangente horizontale audit rouleau $R'_2$, ladite mèche ou lesdites mèches s'épanouissant au contact dudit deuxième rouleau de compression.

12. Procédé selon la revendication 9, **caractérisé en ce que** au moins un troisième rouleau $R'_3$ est présent après ledit deuxième rouleau $R'_2$, ladite mèche ou lesdites mèches formant un angle $\alpha'_3$ de 0 à 180°, en particulier de 5 à 75°, notamment de 10 à 45° avec ledit troisième rouleau de compression $R'_3$ et la tangente horizontale audit rouleau de compression $R'_3$, ladite mèche ou lesdites mèches s'épanouissant au contact dudit troisième rouleau de compression $R'_3$.

13. Procédé selon la revendication 9, **caractérisé en ce que** six à dix rouleaux sont présents et au même niveau.

14. Procédé selon l'une des revendications 1 à 13, **caractérisé en ce que** le pourcentage d'épanouissement à la sortie du dernier rouleau de compression $R'_1$, est d'environ 0 à 300%, en particulier de 0 à 50% par rapport à celui de ladite ou desdites mèches à l'entrée du premier rouleau de compression $R'_1$.

15. Procédé selon l'une des revendications 1 à 14, **caractérisé en ce que** ledit polymère thermoplastique est un polymère thermoplastique non réactif.

16. Procédé selon l'une des revendications 1 à 14, **caractérisé en ce que** ledit polymère thermoplastique est un prépolymère réactif susceptible de réagir sur lui-même ou avec un autre prépolymère, en fonction des fins de chaîne portées par ledit prépolymère, ou encore avec un allongeur de chaîne, ledit polymère réactif étant optionnellement polymérisé lors de l'étape de chauffage.

17. Procédé selon l'une des revendications 1 à 16, **caractérisé en ce que** ledit au moins polymère thermoplastique est sélectionné parmi : les poly(aryl éthercétones) (PAEK), en particulier le poly(étheréthercétone) (PEEK) ; les poly(aryl éthercétonecétone) (PAEKK), en particulier le poly(éthercétonecétone) (PEKK) ; les polyéther-imides (PEI) aromatiques ; les polyaryl sulfones, en particulier les polyphénylène sulfones (PPSU) ; les polyarylsulfures, en particulier les polyphénylène sulfures (PPS) ; les polyamides (PA), en particulier polyamides semi-aromatiques (polyphthalamides) éventuellement modifiées par unités urées ; les PEBA, les polyacrylates en particulier le polyméthacrylate de méthyle (PMMA) ; les polyoléfines, en particulier le polypropylène, l'acide polylactique (PLA), l'alcool polyvinylique (PVA), et les polymères fluorés en particulier le polyfluorure de vinylidène (PVDF) ou le polytetrafluoroéthylène (PTFE) ou le polychlorotrifluoroéthylène (PCTFE); et leurs mélanges, notamment un mélange de PEKK et de PEI, de préférence de 90-10% en poids à 60-40% en poids, en particulier de 90-10% en poids à 70-30% en poids.

18. Procédé selon l'une des revendications 1 à 17, **caractérisé en ce que** ledit au moins polymère thermoplastique est un polymère dont la température de transition vitreuse est telle que Tg ≥ 80°C, notamment ≥ 100°C, en particulier ≥ 120°C, notamment ≥ 140°C, ou un polymère semi-cristallin dont la température de fusion Tf ≥ 150°C.

19. Procédé selon l'une des revendications 1 à 18, **caractérisé en ce que** ledit au moins polymère thermoplastique est sélectionné parmi les polyamides, notamment les polyamides aliphatiques, les polyamides cycloaliphatiques et les polyamides semi-aromatiques (polyphthalamides), le PVDF, le PEEK, PEKK, le PEI et un mélange PEKK et de PEI.

20. Procédé selon l'une des revendications 1 à 19, **caractérisé en ce que** le taux de fibres dans ledit matériau fibreux imprégné est compris de 45 à 65 % en volume, de préférence de 50 à 60% en volume, notamment de 54 à 60%.

21. Procédé selon l'une des revendications 1 à 20, **caractérisé en ce que** le taux de porosité dans ledit matériau fibreux imprégné est inférieure à 10%, notamment inférieur à 5%, en particulier inférieur à 2%.

22. Procédé selon l'une des revendications 1 à 21, **caractérisé en ce qu'**il comprend de plus une étape de mise en forme de ladite mèche ou desdites mèches parallèles dudit matériau fibreux imprégné, par calandrage au moyen d'au moins une calandre chauffante sous forme de ruban unique unidirectionnel ou d'une pluralité de rubans parallèles unidirectionnels avec, dans ce dernier cas, ladite calandre chauffante comportant une pluralité de gorges (73) de calandrage, de préférence jusqu'à 200 gorges de calandrage, en conformité avec le nombre desdits rubans et avec une pression et/ou un écartement entre les rouleaux de ladite calandre régulés par un système asservi.

23. Procédé selon la revendication 22, **caractérisé en ce que** l'étape de calandrage est réalisée au moyen d'une pluralité de calandres chauffantes, montées en parallèle et/ou en série par rapport au sens de défilement des mèches de fibres.

24. Procédé selon l'une des revendications 22 ou 23, **caractérisé en ce que** ladite (ou lesdites) calandre(s) chauffante(s) comprend (comprennent) un système de chauffage intégré par induction ou par microondes, de préférence par microondes, couplé à la présence de charges carbonées dans ledit polymère thermoplastique ou mélange de polymères thermoplastiques.

25. Procédé selon l'une des revendications 1 à 24, **caractérisé en ce qu'**une presse à bande est présente entre le système de chauffage et la calandre.

26. Procédé selon l'une des revendications 1 à 24, **caractérisé en ce qu'**une filière chauffante est présente entre le système de chauffage et la calandre.

27. Procédé selon l'une des revendications 1 à 24, **caractérisé en ce qu'**une presse à bande est présente entre le système de chauffage et la calandre et une filière chauffante est présente entre la presse à bande et la calandre.

28. Procédé selon l'une des revendications 1 à 27, **caractérisé en ce que** lesdites étapes de pré-imprégnation et d'imprégnation sont complétées par une étape de recouvrement de ladite mèche unique ou de ladite pluralité de mèches parallèles après imprégnation par la poudre, ladite étape de recouvrement étant réalisée avant ladite étape de calandrage, par un polymère thermoplastique fondu, pouvant être identique ou différent dudit polymère de pré-imprégnation, ledit polymère fondu étant de préférence de même nature que ledit polymère de pré-imprégnation, de préférence avec ledit recouvrement s'effectuant par extrusion en tête d'équerre par rapport à ladite mèche unique ou à ladite pluralité de mèches parallèles.

29. Procédé selon l'une des revendications 1 à 28, **caractérisé en ce que** ledit polymère thermoplastique comprend en outre des charges carbonées, en particulier du noir de carbone ou des nanocharges carbonées, de préférence choisies parmi des nanocharges carbonées, en particulier des graphènes et/ou des nanotubes de carbone et/ou des nanofibrilles de carbone ou leurs mélanges.

30. Procédé selon l'une des revendications 1 à 29, **caractérisé en ce que** ledit matériau fibreux comprend des fibres continues sélectionnées parmi les fibres de carbone, de verre, de carbure de silicium, de basalte, de silice, les fibres naturelles en particulier de lin ou de chanvre, de lignine, de bambou, de sisal, de soie, ou cellulosiques en particulier de viscose, ou les fibres thermoplastiques amorphes de température de transition vitreuse Tg supérieure à la Tg dudit polymère ou dudit mélange de polymères lorsque ce dernier est amorphe ou supérieure à la Tf dudit polymère ou dudit mélange de polymères lorsque ce dernier est semi-cristallin, ou les fibres thermoplastiques semi-cristallines de température de fusion Tf supérieure à la Tg dudit polymère ou dudit mélange de polymères lorsque ce dernier est amorphe ou supérieure à la Tf dudit polymère ou dudit mélange de polymères lorsque ce dernier est semi-cristallin, ou un mélange de deux ou de plusieurs desdites fibres, de préférence un mélange de fibres de carbone, de verre ou de carbure de silicium, en particulier des fibres de carbone.

31. Ruban unidirectionnel de matériau fibreux imprégné, en particulier ruban enroulé sur bobine, **caractérisé en ce qu'**il est obtenu par un procédé tel que défini selon l'une des revendications 1 à 30.

32. Ruban selon la revendication 31, **caractérisé en ce qu'**il a une largeur (l) et une épaisseur (ep) adaptées à une dépose par robot dans la fabrication de pièces en trois dimensions, sans besoin de refente, et de préférence a une largeur (l) d'au moins 5 mm et pouvant aller jusqu'à 400mm, de préférence comprise entre 5 et 50 mm et de manière encore plus préférée comprise entre 5 et 15mm.

33. Ruban selon l'une des revendications 31 ou 32, **caractérisé en ce que** le polymère thermoplastique est un polyamide aliphatique choisi PA 6, PA 11, PA 12, PA 66, PA 46, PA 610, PA 612, PA 1010, PA 1012, PA 11/1010 ou PA 12/1010 ou un polyamide semi-aromatique tel que un PA MXD6 et un PA MXD10 ou choisi parmi PA 6/6T, PA 6I/6T, PA 66/6T, PA 11/10T, PA 11/6T/10T, PA MXDT/10T, PA MPMDT/10T, PA BACT/6T, PA BACT/10T et PA BACT/10T/6T, PA BACT/10T/11, PA BACT/6T/11, un PVDF, un PEEK, PEKK et un PEI ou un mélange de ceux-ci.

34. Utilisation du procédé tel que défini selon l'une des revendications 1 à 30, pour la fabrication de rubans calibrés adaptés à la fabrication de pièces composites en trois dimensions, par dépose automatique desdits rubans au moyen d'un robot.

35. Utilisation du ruban de matériau fibreux imprégné, tel que défini selon l'une des revendications 31 à 33, dans la fabrication de pièces composites en trois dimensions.

36. Utilisation selon la revendication 34 ou 35, **caractérisée en ce que** ladite fabrication desdites pièces composites concerne les domaines des transports, en particulier automobile, du pétrole et du gaz, en particulier l'offshore, du stockage de gaz, aéronautique, nautique, ferroviaire ; des énergies renouvelables, en particulier éolienne, hydrolienne, les dispositifs de stockage d'énergie, les panneaux solaires ; des panneaux de protection thermique ; des sports et loisirs, de la santé et du médical et de l'électronique.

37. Pièce composite en trois dimensions, **caractérisée en ce qu'**elle résulte de l'utilisation d'au moins un ruban unidirectionnel de matériau fibreux pré imprégné tel que défini selon l'une des revendications 31 à 33.

Lampe IR

$R'_1$ $\quad$ $R'_2$ $\quad$ $\alpha'_2$ $\quad$ h $\quad$ $R'_3$

$\alpha'_1$ $\quad$ $\alpha'_3$

l

# FIGURE 1

23a

21a $\quad$ 23b

21b

22

12

Entrée d'air

10 $\quad$ 11

# FIGURE 2

Angle

$\alpha_1$

24

Lit fluidisé

Entrée d'air

**FIGURE 3**

Angle

$\alpha_1$

$R_1$

$R_2$

ngle

$\alpha_2$

$H_1$

$H_2$

Entrée d'air

**FIGURE 4**

**FIGURE 5**

**FIGURE 6**

**FIGURE 7**

**FIGURE 8**

**FIGURE 9**

**FIGURE 10**

**FIGURE 11**

**FIGURE 12**

31

32

Angle
α''₁

R''₁

R''₂

Angle
α''₂

32

31

H₁

H₂

**FIGURE 13**

31

32

Angle
α''₁

R''₁

R''₂

Lit fluidisé

Angle
α''₂=0

**FIGURE 14**

**FIGURE 15**

**FIGURE 16**

**FIGURE 17**

**FIGURE 18**

**FIGURE 19**

**FIGURE 20**

**FIGURE 21**

Europäisches
Patentamt

European
Patent Office

Office européen
des brevets

**RAPPORT DE RECHERCHE EUROPEENNE**

Numéro de la demande

EP 18 30 6719

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2018/115739 A1 (ARKEMA FRANCE [FR]) 28 juin 2018 (2018-06-28) | 31-37 | INV. B29B15/12 |
| A | * revendications 1-29 * * page 16, ligne 12 - ligne 13 * ----- | 1-30 | |
| E | EP 3 418 019 A1 (ARKEMA FRANCE [FR]) 26 décembre 2018 (2018-12-26) * revendications 1,28-34 * ----- | 31-37 | |
| A,D | EP 2 725 055 A1 (TORAY INDUSTRIES [JP]) 30 avril 2014 (2014-04-30) * alinéa [0113] - alinéa [0114] * * alinéa [0461] - alinéa [0465] * * figure 13 * ----- | 1-30 | |
| A | FR 3 017 329 A1 (ARKEMA FRANCE [FR]) 14 août 2015 (2015-08-14) * alinéa [0001] - alinéa [0005] * * alinéa [0021] - alinéa [0028] * * alinéa [0032] - alinéa [0041] * * alinéa [0068] - alinéa [0070] * * revendications 15-20 * ----- | 1-30 | |

**DOMAINES TECHNIQUES RECHERCHES (IPC)**

B29B

Le présent rapport a été établi pour toutes les revendications

| Lieu de la recherche | Date d'achèvement de la recherche | Examinateur |
|---|---|---|
| Munich | 6 juin 2019 | Jouannon, Fabien |

EPO FORM 1503 03.82 (P04C02)

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 ...................................................................................
& : membre de la même famille, document correspondant

**ANNEXE AU RAPPORT DE RECHERCHE EUROPEENNE
RELATIF A LA DEMANDE DE BREVET EUROPEEN NO.**

EP 18 30 6719

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-06-2019

| Document brevet cité au rapport de recherche | | Date de publication | Membre(s) de la famille de brevet(s) | | Date de publication |
|---|---|---|---|---|---|
| WO 2018115739 | A1 | 28-06-2018 | FR 3061067 A1 | | 29-06-2018 |
| | | | WO 2018115739 A1 | | 28-06-2018 |
| EP 3418019 | A1 | 26-12-2018 | EP 3418017 A1 | | 26-12-2018 |
| | | | EP 3418018 A1 | | 26-12-2018 |
| | | | EP 3418019 A1 | | 26-12-2018 |
| | | | FR 3067961 A1 | | 28-12-2018 |
| | | | WO 2018234439 A1 | | 27-12-2018 |
| EP 2725055 | A1 | 30-04-2014 | CN 103608386 A | | 26-02-2014 |
| | | | EP 2725055 A1 | | 30-04-2014 |
| | | | ES 2650727 T3 | | 22-01-2018 |
| | | | KR 20140024870 A | | 03-03-2014 |
| | | | TW 201307449 A | | 16-02-2013 |
| | | | US 2014155540 A1 | | 05-06-2014 |
| | | | US 2018362760 A1 | | 20-12-2018 |
| | | | WO 2012176788 A1 | | 27-12-2012 |
| FR 3017329 | A1 | 14-08-2015 | CN 106163756 A | | 23-11-2016 |
| | | | EP 3105025 A2 | | 21-12-2016 |
| | | | EP 3446845 A1 | | 27-02-2019 |
| | | | FR 3017329 A1 | | 14-08-2015 |
| | | | JP 6450773 B2 | | 09-01-2019 |
| | | | JP 2017507045 A | | 16-03-2017 |
| | | | KR 20160110445 A | | 21-09-2016 |
| | | | US 2017165875 A1 | | 15-06-2017 |
| | | | WO 2015121583 A2 | | 20-08-2015 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012066241 A2
- US 20140005331 A1
- EP 0324680 A
- US 4541884 A
- EP 0406067 A
- EP 0201367 A
- WO 2016062896 A
- WO 2008135663 A
- EP 2586585 A
- US 20020197397 A

- WO 2015121583 A
- EP 0335186 A
- DE 1629830
- EP 2725055 A
- EP 0287427 A
- JP 2013132890 A
- WO 9628258 A
- WO 9220521 A
- EP 1505099 A

**Littérature non-brevet citée dans la description**

- **B. BENZLER.** Applikationslabor. Mettler Toledo, Janvier 2001